# EUROPÄISCHE PATENTSCHRIFT

(11) **EP 3 476 779 B1**
(45) Veröffentlichungstag und Bekanntmachung des Hinweises auf die Patenterteilung: **01.12.2021**
(21) Anmeldenummer: 18202326.7
(22) Anmeldetag: 24.10.2018
(51) Int. Cl.: B65G 47/256, B65G 47/14, B67B 3/064

(54) **VORRICHTUNG UND VERFAHREN ZUM SORTIEREN UND VEREINZELN VON VERSCHLUSSKAPPEN**
APPARATUS AND METHOD FOR SORTING AND SEPARATING CLOSURE CAPS
DISPOSITIF ET PROCÉDÉ DE TRIAGE ET DE SÉPARATION DES CAPUCHONS DE FERMETURE

(30) Priorität: 27.10.2017 DE 102017125302
(43) Veröffentlichungstag der Anmeldung: 01.05.2019
(73) Patentinhaber: Groninger GmbH&Co. KG, 91625 Schnelldorf (DE)
(72) Erfinder: Groß, Jürgen, 74585 Rot am See (DE)
(74) Vertreter: Witte, Weller & Partner Patentanwälte mbB

(56) Entgegenhaltungen:
- EP-A1- 0 524 898
- JP-A- H0 616 225
- JP-A- S5 948 322
- US-A- 2 922 548
- US-A- 3 098 584
- US-A- 3 168 186
- US-A- 3 635 325

## Beschreibung

Die vorliegende Erfindung betrifft eine Vereinzelungsvorrichtung mit einer Sortiereinrichtung und ein Verfahren zum Vereinzeln und Sortieren von Verschlusskappen, wobei die Verschlusskappen in einer Mehrzahl von Sortiertaschen in einer Transportrichtung transportiert werden, wobei die Verschlusskappen in den Sortiertaschen in zwei verschiedenen Orientierungen positionierbar sind, wobei nur die Verschlusskappen aus den Sortiertaschen weggeführt werden, die in der zweiten Orientierung ausgerichtet sind. Des Weiteren betrifft die vorliegende Erfindung eine Füllanlage mit einer solchen Vereinzelungsvorrichtung.

Derartige Verfahren und Vorrichtungen zum Sortieren und Vereinzeln sind in dem Stand der Technik allgemein bekannt. Dabei handelt es sich meist um Scheibensortierer für Verschlusskappen, die in einer Trommel angeordnet sind. Die Scheibensortierer sortieren die Verschlusskappen an dem Rand der geneigten Trommel in Sortiertaschen entsprechend der Umfangkontur. Die Verschlusskappen weisen in der Regel eine flache und eine hohle Seite auf. Je nachdem wie die Verschlusskappen in die Sortiertaschen eingebracht wurden, ist entweder die flache oder die hohle Seite der Verschlusskappe nach oben hin orientiert. An dem Rand der Trommel sind des Weiteren pneumatische Düseneinrichtungen angeordnet, die eine radial nach innen gerichtete Luftströmung erzeugen. Die pneumatischen Düseneinrichtungen sind so angeordnet, dass die erzeugte Luftströmung über die obere Seite der Verschlusskappen führt. Ist die flache Seite der Verschlusskappen nach oben hin orientiert, wird die flache Seite angeströmt und gehalten. Ist die hohle Seite der Verschlusskappen nach oben hin orientiert, werden die Verschlusskappen aus der Sortiertasche zurück in die Trommel ausgeblasen. Nach dem Ausblasen sind nur noch Kappen in den Sortiertaschen angeordnet, deren flache Seite nach oben hin orientiert ist. An einer stromabwärts gelegenen Position werden diese Kappen aus der Trommel ausgeschleust und z.B. auf ein Band übergeben.

Wenn nun die Sortierleistung erhöht werden soll, kann man die Trommel beispielsweise etwas schneller drehen. Dies ist aber nur bis zu einer gewissen Drehzahl möglich, ab der sich die Verschlusskappen nicht mehr in die Sortiertaschen einsortieren lassen. Zusätzlich zum Erhöhen der Drehzahl kann auch der Umfang der Trommel vergrößert werden, wodurch mehr Taschen an dem Rand der Trommel angeordnet werden können. Dadurch wird ebenfalls die Sortierleistung erhöht. Der Umfang kann aber nicht beliebig vergrößert werden, da die Größe der Trommel auch von dem zur Verfügung stehenden Bauraum abhängt.

Die oben beschriebene Methode zum Ausscheiden falsch orientierter Deckel hat zur Folge, dass eine relevante Anzahl, in der Regel etwa 30 % bis 50 % der Deckel, zwar in den Taschen sortiert sind, aber wegen falscher Lage aussortiert werden müssen.

Die Druckschrift US 3 098 584 A zeigt eine Sortiermaschine zum Sortieren von Knöpfen, die einer Nähmaschine zugeführt werden sollen. Genauer bezieht sich die Erfindung auf eine bunkerähnliche Vorrichtung, in die Knöpfe gefüllt, oder in der Knöpfe geliefert werden können und aus der die Knöpfe einzeln in ein Magazin in definierter Orientierung entladen werden, welches zum Transport zu und zum Aufspannen auf eine Nahmaschine dient.

Des Weiteren zeigt die Druckschrift JP H06 16225 einen Apparat zur Versorgung mit sortierten, in einer definierten Orientierung vorliegenden scheibenförmigen Teile, die in einer Stellung in eine Gleitrinne eingebracht werden und deren Orientierung durch den Transport in eine vorbestimmte Richtung ausgerichtet werden.

Des Weiteren zeigt die Druckschrift US 3 635 325 A einen Verschluss-Handhabungs-Apparat, der dazu ausgelegt ist, die Orientierung von relativ großen kegelstumpfartigen Verschlüssen, die schwerer an dem schmalen geschlossenen Ende sind, zu beeinflussen, indem er mit sich bewegenden Taschen ausgestattet ist, die so geformt sind, dass sie mit der Form der Verschlüsse übereinstimmen und in die die Mehrheit der Verschlüsse aufgrund der Schwerkraft fallen, um eine orientierte Position anzunehmen sind Vorkehrungen getroffen worden, um falsch positionierte Verschlüsse, die von den sich bewegenden Taschen geführt werden, so zu manipulieren, dass sie in einer orientierten Position in den Taschen vorliegen. US 3 635 325 A offenbart die Merkmale des Oberbegriffs des Anspruchs 1. Darüber hinaus offenbart US 3 635 325 A ein Verfahren zum Vereinzeln und Sortieren von Verschlusskappen, wobei das Verfahren die folgenden Schritte aufweist:
- Einbringen der Verschlusskappen in eine Trommel, die eine drehbar gelagerte Scheibe aufweist, wobei eine Mehrzahl von Sortiertaschen an einem äußeren Rand der Scheibe umlaufend angeordnet sind;
- Drehen der Scheibe um eine Längsachse der Trommel, um die Verschlusskappen in den Sortiertaschen zu vereinzeln, wobei eine Längsachse der Trommel gegenüber einer vertikalen Richtung, die der Richtung der Schwerkraft entspricht, um einen Winkel β geneigt ist;
- Transportieren von jeweils einer der Verschlusskappen in einer Transportrichtung in jeweils einer der Sortiertaschen, wobei ein Querschnittsverlauf jeder der Sortiertaschen derart ausgebildet ist, dass eine Verschlusskappe in der Sortiertasche in einer ersten Orientierung oder in einer zweiten Orientierung derart positionierbar ist, dass die Verschlusskappe zumindest in der zweiten Orientierung aus der Sortiertasche herausragt, wobei die Verschlusskappen jeweils in den Sortiertaschen in der ersten Orientierung oder in der zweiten Orientierung positioniert sind; und
- Führen nur der Verschlusskappen, die in der zweiten Orientierung ausgerichtet sind, entlang einer Anlagefläche eines Anschlagelements aus der Transportrichtung, wobei die Anlagefläche schräg zu der Transportrichtung angeordnet ist, wobei das Anschlagelement derart angeordnet ist, dass die Verschlusskappe nur in der zweiten Orientierung an der Anlagefläche in Anlage kommt, wobei jede Verschlusskappe in der zweiten Orientierung entlang der Anlagefläche auf eine zweite Transportstrecke geführt wird.

Des Weiteren zeigt die Druckschrift US 3 168 186 A einen Apparat zum Beschicken, Orientieren und Zuführen von Gegenständen, insbesondere einen Apparat von der Beschaffenheit, der dazu geeignet ist, eine Vielzahl hohlförmiger Gegenstände in einer einheitlichen und selektierenden Methode zu orientieren.

Des Weiteren zeigt die Druckschrift EP 0 524 898 A1 ein Gerät, das im Wesentlichen aus einem Drehorgan besteht, das zwischen dem Ausgang eines Behälters zum Speichern von Schüttgut und der Zuführung eines Apparats zum Ausgeben zu einer Einheit zwischengeschaltet ist; das besagte Drehorgan ist radial angeordnet, um Teile von der gleichen Kategorie und mit asymmetrischen Enden, die ausgegeben werden sollen, zur Zuführung des Ausgabe-Apparats zu befördern, wenn sie in der für die Nutzung korrekten Richtung sind oder um sie auszusortieren und in den Speicherbehälter zurück zuführen, wenn sie nicht in der für die Nutzung korrekten Richtung sind. Das Drehorgan ist vertikal geneigt und besitzt eine horizontale Achse, die mit einem kontinuierlich betrieben Malteserkreuz-Mechanismus gekoppelt ist, um das Drehorgan von der schrittweise turnusmäßigen Antriebsbewerbung abhängig zu machen, um die Entleerung der inkorrekte orientierten Teile mit Hilfe der Schwerkraft sicherzustellen, in Kombination mit einer Auswurframpe, passend an einem Hilfsrahmen angeordnet, um mit der maximalen Geschwindigkeit des besagten Malteserkreuzes übereinzustimmen.

Es ist daher eine Aufgabe der vorliegenden Erfindung, eine verbesserte Sortiereinrichtung und ein verbessertes Verfahren zum Sortieren von Verschlusskappen anzugeben, das eine höhere Sortierleistung aufweist und die oben genannten Nachteile überwindet.

Gemäß einem ersten Aspekt der Erfindung wird daher eine Vereinzelungsvorrichtung mit einer Trommel zum Vereinzeln von Verschlussklappen und einer Sortiereinrichtung zum Sortieren von Verschlusskappen vorgeschlagen. Die Sortiereinrichtung weist eine Mehrzahl von Sortiertaschen zum Transportieren der Verschlusskappen in einer Transportrichtung und ein Anschlagelement mit einer Anlagefläche auf. Ein Querschnittsverlauf jeder der Sortiertaschen ist derart ausgebildet, dass eine Verschlusskappe in der Sortiertasche in einer ersten Orientierung oder in einer zweiten Orientierung derart positionierbar ist, dass die Verschlusskappe zumindest in der zweiten Orientierung aus der Sortiertasche herausragt. Dabei sind die erste Orientierung und die zweite Orientierung voneinander verschieden. Die Anlagefläche ist schräg zu der Transportrichtung angeordnet. Das Anschlagelement ist derart angeordnet, dass die Verschlusskappe nur in der zweiten Orientierung an der Anlagefläche in Anlage kommt und entlang der Anlagefläche weggeführt wird. Die Trommel ist derart ausgebildet, dass jede Verschlusskappe in jeweils eine Sortiertasche vereinzelt wird. Die Vereinzelungsvorrichtung weist eine erste Transportstrecke und einen ersten Abschnitt auf, wobei der erste Abschnitt stromabwärts von dem Anschlagelement angeordnet ist und der derart ausgebildet ist, dass die Verschlusskappen jeweils auf die erste Transportstrecke geführt werden, so dass die Verschlusskappen auf der ersten Transportstrecke in der ersten Orientierung ausgerichtet sind. Die Vereinzelungsvorrichtung weist in dem ersten Abschnitt ein weiteres Anschlagelement mit einer weiteren Anlagefläche auf, wobei die weitere Anlagefläche schräg zu der Transportrichtung angeordnet ist, wobei das weitere Anschlagelement derart angeordnet ist, dass jede Verschlusskappe in der ersten Orientierung an der weiteren Anlagefläche in Anlage kommt und entlang der Anlagefläche auf die erste Transportstrecke geführt wird. Die Vereinzelungsvorrichtung weist eine zweite Transportstrecke auf, wobei das Anschlagelement derart angeordnet ist, dass jede Verschlusskappen in der zweiten Orientierung entlang der Anlagefläche auf die zweite Transportstrecke geführt wird, so dass die Verschlusskappen auf der zweiten Transportstrecke in der zweiten Orientierung ausgerichtet sind. Die Vereinzelungsvorrichtung weist eine Wendeeinrichtung auf, die dazu ausgebildet ist, die Orientierung der Verschlusskappen auf der zweiten Transportstrecke zu ändern, so dass die Verschlusskappen von der zweiten Orientierung in die erste Orientierung gewendet werden. Die Vereinzelungsvorrichtung ist so gestaltet, dass eine Längsachse der Trommel gegenüber einer vertikalen Richtung, die der Richtung der Schwerkraft entspricht, um einen Winkel β geneigt ist.

Gemäß einem zweiten Aspekt der Erfindung wird ein Verfahren zum Vereinzeln von Verschlusskappen vorgeschlagen. In einem ersten Schritt werden die Verschlusskappen in eine Trommel eingebracht. Die Mehrzahl von Sortiertaschen sind an einer Mantelfläche der Trommel umlaufend angeordnet. In einem weiteren Schritt wird die Trommel um eine Längsachse der Trommel gedreht, um die Verschlusskappen zu der Mantelfläche der Trommel zu befördern und in den Sortiertaschen vereinzelt anzuordnen, wobei die Längsachse der Trommel gegenüber einer vertikalen Richtung, die der Richtung der Schwerkraft entspricht, um einen Winkel ß geneigt ist. In einem weiteren Schritt wird jeweils eine der Verschlusskappen in einer Transportrichtung in jeweils einer der Sortiertaschen transportiert. Dabei ist ein Querschnittsverlauf jeder der Sortiertaschen derart ausgebildet, dass eine Verschlusskappe in der Sortiertasche in einer ersten Orientierung oder in einer zweiten Orientierung derart positionierbar ist, dass die Verschlusskappe zumindest in der zweiten Orientierung aus der Sortiertasche herausragt. Die Verschlusskappen sind jeweils in den Sortiertaschen in einer ersten Orientierung oder in einer zweiten Orientierung positioniert. In einem weiteren Schritt werden nur die Verschlusskappen, die in der zweiten Orientierung ausgerichtet sind, entlang der Anlagefläche eines Anschlagelements aus der Transportrichtung geführt. In diesem Schritt des Führens werden die Verschlusskappen auf eine zweite Transportstrecke geführt, so dass die Verschlusskappen auf der zweiten Transportstrecke in der zweiten Orientierung ausgerichtet sind. Die Anlagefläche ist schräg zu der Transportrichtung angeordnet. Das Anschlagelement ist derart angeordnet, dass die Verschlusskappe nur in der zweiten Orientierung an der Anlagefläche in Anlage kommt. In einem weiteren Schritt werden die Verschlusskappen, die in der ersten Orientierung ausgerichtet sind, in der Transportrichtung in der Mehrzahl von Sortiertaschen weitertransportiert. In einem weiteren Schritt werden nur die Verschlusskappen, die in der ersten Orientierung ausgerichtet sind, aus der Transportrichtung in einem ersten Abschnitt auf eine erste Transportstrecke geführt, so dass die Verschlusskappen auf der ersten Transportstrecke in der ersten Orientierung ausgerichtet sind, wobei der erste Abschnitt stromabwärts von dem Anschlagelement angeordnet ist. In einem weiteren Schritt wird die Orientierung der Verschlusskappen auf der zweiten Transportstrecke mittels einer Wendeeinrichtung geändert, so dass die Verschlusskappen von der zweiten Orientierung in die erste Orientierung gewendet werden,

Gemäß einem dritten Aspekt der Erfindung wird eine Füllanlage mit einer Vereinzelungsvorrichtung nach dem dritten Aspekt der Erfindung vorgeschlagen. Die Vereinzelungsvorrichtung ist dazu ausgebildet, die Verschlusskappen der Füllanlage zuzuführen.

Gemäß einem vierten Aspekt der Erfindung wird ein Verfahren zum Zuführen einer Mehrzahl von Verschlusskappen zu einer Füllanlage vorgeschlagen. In einem ersten Schritt werden die Verschlusskappen mittels des Verfahrens nach dem vierten Aspekt der Erfindung vereinzelt. In einem weiteren Schritt werden die vereinzelten Verschlusskappen der Füllanlage zugeführt, insbesondere durch die erste Transportstrecke und/oder die zweite Transportstrecke.

Gemäß einem fünften Aspekt der Erfindung wird ein System mit einer Vereinzelungsvorrichtung nach dem ersten Aspekt der Erfindung oder mit einer Füllanlage nach dem dritten Aspekt der Erfindung vorgeschlagen. Das System weist des Weiteren die Mehrzahl von Verschlusskappen auf.

Mittels der erfindungsgemäßen Lösung wird eine alternative und verbesserte Vereinzelungsvorrichtung bzw. ein alternatives und verbessertes Verfahren zum Vereinzeln und Sortieren bereitgestellt, das rein mechanisch die Verschlusskappen bezüglich zweier Orientierung sortiert. Es sind dafür keine pneumatischen Komponenten zum Sortieren erforderlich.

Des Weiteren können die Verschlusskappen, nachdem sie nach ihrer Orientierung sortiert worden sind, getrennt ausgeschleust werden. Damit ergibt sich eine Ausbeute von ausgeschleusten Verschlusskappen von 100 %.

Die Verschlusskappen mit entweder der ersten oder der zweiten Orientierung können vor dem Zuführen zu der Füllanlage gewendet werden, so dass nach dem Wenden alle Verschlusskappen dieselbe Orientierung aufweisen. Alternativ können die Verschlusskappen auf zwei verschiedenen Zuführungen mit unterschiedlicher Orientierung der Füllanlage zugeführt werden.

Bei der erfindungsgemäßen Lösung zum Sortieren und Vereinzeln von Verschlusskappen sind keine Erhöhung der Drehzahl und keine Vergrößerung der Trommel erforderlich, um die Sortierleistung zu steigern.

Die Begriffe stromabwärts und stromaufwärts sind relativ zu der Bewegungsrichtung der Verschlusskappen zu verstehen. Sind die Verschlusskappen in den Sortiertaschen angeordnet, so entspricht die Bewegungsrichtung der Verschlusskappen der Transportrichtung der Sortiertaschen.

Dadurch, dass sowohl die Verschlusskappen in der ersten Orientierung als auch die Verschlusskappen in der zweiten Orientierung ausgeschleust werden, werden keine Verschlusskappen durch das Sortieren weggeblasen. Dementsprechend ergibt sich eine Ausbeute von Verschlusskappen von 100 %. Die erste Transportstrecke dient dabei zum Abtransportieren der Verschlusskappen in der ersten Orientierung.

Die Verschlusskappen in der ersten Orientierung werden somit in einem stromabwärts gelegenen Bereich analog zu den Verschlusskappen in der zweiten Orientierung in einem stromaufwärts gelegenen Bereich ausgeschleust. Demnach werden zuerst die Verschlusskappen mit der zweiten Orientierung ausgeschleust und danach die Verschlusskappen mit der zweiten Orientierung ausgeschleust.

Die zweite Transportstrecke dient dabei zum Abtransportieren der Verschlusskappen in der zweiten Orientierung.

Nach dem Wenden befinden sich die Verschlusskappen auf der ersten Transportstrecke und die Verschlusskappen auf der zweiten Transportstrecke in der gleichen Orientierung. Dies ist besonders vorteilhaft, da in der Regel gewünscht ist, dass die Verschlusskappen nur in einer bestimmten Orientierung zur weiteren Verwendung ausgerichtet sind.

Dadurch bewegen sich die Verschlusskappen, wenn diese in die Trommel eingebracht werden, durch die Schwerkraft in eine untere Hälfte der Scheibe und sammeln sich am Rand der Scheibe und der Mantelfläche der Trommel. Vorzugsweise ist die Sortiereinrichtung an einer oberen Hälfte der Scheibe angeordnet. Dadurch wird erreicht, dass sich die Verschlusskappen in den Sortiertaschen bestmöglich vereinzeln.

Die eingangs gestellte Aufgabe wird daher vollkommen gelöst.

In einer Ausgestaltung der Vereinzelungsvorrichtung kann vorgesehen sein, dass die erste Orientierung und die zweite Orientierung entgegengesetzt zueinander sind.

Die Verschlusskappen sind meist symmetrisch ausgebildet und weisen meist eine Zylinderform auf. Die Verschlusskappen weisen dabei in Längsrichtung der Zylinderform zwei entgegengesetzte Enden auf. Es ist daher besonders vorteilhalft, wenn die erste und die zweite Orientierung ebenfalls entgegengesetzt zueinander ausgerichtet sind.

In einer weiteren Ausgestaltung der Vereinzelungsvorrichtung kann vorgesehen sein, dass die Sortiertasche eine erste Auflageebene und eine zweite Auflageebene aufweist, die derart ausgebildet sind, dass die Verschlusskappe in der ersten Orientierung auf der ersten Auflageebene und in der zweiten Orientierung auf der zweiten Auflageebene aufliegt, und wobei ein erster Abstand von der ersten Auflageebene zu dem Anschlagelement größer ist als ein zweiter Abstand von der zweiten Auflageebene zu dem Anschlagelement.

Der erste und der zweite Abstand sind somit so wählbar, dass eine Verschlusskappe, die auf der ersten Auflageebene aufliegt nicht in Anlage an die Anlagefläche des Anschlagelements kommen kann, wohingegen eine Verschlusskappe, die auf der zweiten Auflagefläche aufliegt in Anlage an die Anlagefläche des Anschlagelements kommen kann.

In einer weiteren Ausgestaltung der Vereinzelungsvorrichtung kann vorgesehen sein, dass die erste Auflageebene und die zweite Auflageebene parallel zueinander angeordnet sind.

Die Verschlusskappen sind meist symmetrisch ausgebildet und weisen meist eine Zylinderform auf. Die Verschlusskappen weisen dabei in Längsrichtung der Zylinderform zwei entgegengesetzte Enden auf, die meist parallel zueinander verlaufen. Es ist daher besonders vorteilhalft, wenn die erste Auflageebene und die zweite Auflageebene parallel zueinander angeordnet sind.

In einer weiteren Ausgestaltung der Vereinzelungsvorrichtung kann vorgesehen sein, dass das Anschlagelement parallel zu der ersten Auflageebene und zweiten Auflageebene angeordnet ist.

Die Verschlusskappen sind meist symmetrisch ausgebildet und weisen meist eine Zylinderform auf. Die Verschlusskappen weisen dabei in Längsrichtung der Zylinderform zwei entgegengesetzte Enden auf, die meist parallel zueinander verlaufen. Es ist daher besonders vorteilhalft, wenn das Anschlagelement parallel zu der ersten Auflageebene und zweiten Auflageebene angeordnet ist.

In einer weiteren Ausgestaltung der Vereinzelungsvorrichtung kann vorgesehen sein, dass die Anlagefläche sich in eine Führungsrichtung erstreckt, wobei die Führungsrichtung der Richtung entspricht, in die jede Verschlusskappe entlang der Anlagefläche aus der Transportrichtung herausgeführt wird.

Insbesondere bestimmt die Länge der Anlagefläche, wie weit die Verschlusskappen in der Führungsrichtung geführt werden. Die Länge der Anlagefläche ist vorzugsweise mindestens so groß wie eine Breite der Sortiertaschen in der Führungsrichtung.

In einer weiteren Ausgestaltung der Vereinzelungsvorrichtung kann vorgesehen sein, dass die Sortiertasche eine Öffnung aufweist, die derart ausgebildet ist, dass die Verschlusskappe in der Führungsrichtung sich aus der Sortiertasche herausbewegt, wenn die Verschlusskappe entlang der Anlagefläche geführt wird.

Eine Sortiertasche umschließt meist die darin angeordnete Verschlusskappe fast vollständig. Durch die Öffnung in der Sortiertasche kann die Verschlusskappe sich aus der Sortiertasche herausbewegt werden.

In einer weiteren Ausgestaltung der Vereinzelungsvorrichtung kann vorgesehen sein, dass die Führungsrichtung mit der Transportrichtung einen Winkel α zwischen 0° und 90°, vorzugsweise zwischen 20° und 70°, insbesondere von 45°, einschließt.

Umso kleiner Winkel α ist, umso länger ist der Abschnitt in dem die Verschlusskappen aus der Transportrichtung geführt werden. Da aber der zu Verfügung stehende Bauraum in der Regel nicht beliebig groß ist, kann dieser Abschnitt auch nicht beliebig groß gewählt werden. Des Weiteren, umso größer der Winkel α ist, umso größer werden die Kräfte, die auf die Sortiertasche und das Anschlagelement bei dem Führen aus der Transportrichtung wirken. Die Wahl des Winkels a hängt demnach von dem zur Verfügung stehenden Bauraum und von der maximalen mechanischen Belastung, die auf die Sortiertasche und das Anschlagelement wirken können, ab.

In einer weiteren Ausgestaltung der Vereinzelungsvorrichtung kann vorgesehen sein, dass die Sortiertasche mindestens eine Erhebung und/oder mindestens eine Vertiefung in einem Boden der Sortiertasche aufweist, insbesondere wobei die mindestens eine Erhebung und/oder mindestens eine Vertiefung einer Innenkontur der Verschlusskappe entsprechen.

Die Innenkontur der Verschlusskappen ist in der Regel zylinderförmig ausgebildet. Demnach ist es besonders vorteilhaft, wenn die mindestens eine Vertiefung korrespondierend zu der Mantelfläche der Verschlusskappen ausgebildet sind und die mindestens eine Erhebung korrespondierend zu dem Hohlraum bzw. zu der Ausnehmung in der Verschlusskappe ausgebildet sind, wobei der Hohlraum bzw. die Ausnehmung der Zylinderform der Innenkontur entsprechen.

In einer weiteren Ausgestaltung der Vereinzelungsvorrichtung kann vorgesehen sein, dass sich die mindestens eine Erhebung bis zu der zweiten Auflageebene erstreckt und/oder die mindestens eine Vertiefung bis zu der ersten Auflageebene erstreckt.

Dadurch werden durch die mindestens eine Erhebung und die mindestens eine Vertiefung die erste und die zweite Auflagefläche ausgebildet.

In einer weiteren Ausgestaltung der Vereinzelungsvorrichtung kann vorgesehen sein, dass die mindestens eine Erhebung so ausgebildet ist, dass die Verschlusskappe in der ersten Orientierung mit einer Innenkontur der Verschlusskappe die mindestens eine Erhebung umgibt und in der zweiten Orientierung auf der mindestens einen Erhebung aufliegt.

Dadurch weist die dem Boden der Sortiertasche zugewandte Seite der Verschlusskappe in der ersten und zweiten Orientierung einen unterschiedlichen Abstand zu dem Anschlagelement auf. Insbesondere ist der Abstand in der zweiten Orientierung kleiner als in der ersten Orientierung.

In einer weiteren Ausgestaltung der Vereinzelungsvorrichtung kann vorgesehen sein, dass die Sortiertasche eine Form eines Hohlzylinders aufweist, insbesondere wobei die Öffnung der Sortiertasche in der Mantelfläche des Hohlzylinders angeordnet ist, insbesondere wobei die Grundfläche der Sortiertasche oder des Hohlzylinders eine U-Form aufweist, insbesondere wobei sich der Querschnittsverlauf entlang der Längsachse des Hohlzylinders erstreckt.

In einer Ausgestaltung der Vereinzelungsvorrichtung kann vorgesehen sein, dass die Trommel eine drehbar gelagerte Scheibe aufweist, wobei die Mehrzahl von Sortiertaschen an einem äußeren Rand der Scheibe umlaufend angeordnet sind, insbesondere wobei die Scheibe an einem Ende der Trommel angeordnet ist.

Durch das Drehen der Scheibe können die Verschlusskappen, die in die Trommel eingebracht werden, zu dem Rand der Scheibe bewegt werden und dort in die Sortiertaschen Vereinzelt werden.

In einer weiteren Ausgestaltung der Vereinzelungsvorrichtung kann vorgesehen sein, dass die Scheibe senkrecht zu einer Längsachse der Trommel ausgerichtet ist, insbesondere wobei der äußere Rand der Scheibe an eine Mantelfläche der Trommel angrenzt.

Dadurch kann die Scheibe symmetrisch zu der Längsachse der Trommel angeordnet werden.

In einer weiteren Ausgestaltung der Vereinzelungsvorrichtung kann vorgesehen sein, dass die Öffnungen der Sortiertaschen radial außen angeordnet sind, insbesondere wobei die Sortiertaschen an eine Mantelfläche der Trommel angrenzen.

Vorzugsweise ist die Mantelfläche geschlossen und weist nur im Bereich der Sortiereinrichtung eine Aussparung auf, um die Verschlusskappen aus der Trommel herauszuführen. Insbesondere schließt die Mantelfläche die Öffnungen der Sortiertaschen, so dass die Verschlusskappen nur im Bereich der Sortiereinrichtung aus den Sortiertaschen herausgeführt werden können.

In einer weiteren Ausgestaltung der Vereinzelungsvorrichtung kann vorgesehen sein, dass die Vereinzelungsvorrichtung eine Antriebseinheit zum Drehen der Scheibe um eine Längsachse der Trommel aufweist, wobei die Transportrichtung der Drehrichtung der Scheibe entspricht.

Dadurch werden die Verschlusskappen umlaufend in den Sortiertaschen am Rand der Scheibe transportiert.

In einer weiteren Ausgestaltung der Vereinzelungsvorrichtung kann vorgesehen sein, dass, die Wendeeinrichtung als getaktete oder kontinuierliche Wendeeinrichtung ausgebildet ist.

In einer weiteren Ausgestaltung der Vereinzelungsvorrichtung kann vorgesehen sein, dass die Vereinzelungsvorrichtung einen zweiten Abschnitt aufweist, der stromabwärts von der Wendeeinrichtung gelegenen ist und in dem die erste Transportstrecke und die zweite Transportstrecke zusammen geführt werden.

Dadurch werden die Verschlusskappen zu einem Produktstrom zusammen geführt. Dadurch wird nur eine Zuführung zu weiteren Vorrichtungen, wie beispielsweise einer Füllanlage, verwendet, was den Platzbedarf der Transportstrecken verringert.

In einer weiteren Ausgestaltung der Vereinzelungsvorrichtung kann vorgesehen sein, dass der Winkel β zwischen 0° und 90°, vorzugsweise zwischen 20° und 70°, insbesondere von 45°, beträgt.

In einer weiteren Ausgestaltung der Vereinzelungsvorrichtung kann vorgesehen sein, dass das die erste Transportstrecke und/oder die zweite Transportstrecke derart ausgebildet sind, dass die Verschlusskappen mittels der Schwerkraft entlang der ersten Transportstrecke bzw. der zweiten Transportstrecke bewegt werden.

Das Gefälle der Transportstrecken ist dabei so zu wählen, dass die Hangabtriebskraft der Verschlusskappen groß genug ist um den Reibungswiderstand zu überwinden.

In einer weiteren Ausgestaltung der Vereinzelungsvorrichtung kann vorgesehen sein, dass die Vereinzelungsvorrichtung eine pneumatische Düseneinrichtung aufweist, die derart ausgebildet ist, dass sie eine Luftströmung erzeugt, mittels der die Verschlusskappen entlang der ersten Transportstrecke bzw. der zweiten Transportstrecke bewegt werden.

Dadurch wird erreicht, dass die Transportstrecken auch horizontal angeordnet sein können, ohne dass die Verschlusskappen auf den Transportstrecken stehen bleiben.

In einer Ausgestaltung des Systems kann vorgesehen sein, dass jede der Verschlusskappen eine hohlförmige Seite und eine flache Seite aufweist, insbesondere wobei die hohlförmige Seite in der ersten Orientierung auf der ersten Auflageebene und die flache Seite in der zweiten Orientierung auf der zweiten Auflageebene aufliegt.

Die Verschlusskappen weisen meist eine Hohlzylinderform auf, wobei ein Ende geschlossen und ein anderes Ende offen ist. Das geschlossene Ende entspricht der flachen Seite und das offene Ende entspricht der hohlförmigen Seite. Dadurch lässt sich, wie bereits beschrieben, der Querschnittsverlauf der Sortiertaschen auf besonders einfache Weise gestalten, um die Verschlusskappen in einer ersten und in einer zweiten Orientierung anzuordnen.

In einer Ausgestaltung des Verfahrens zum Vereinzeln und Sortieren kann vorgesehen sein, dass die erste Orientierung und die zweite Orientierung entgegengesetzt zueinander sind.

Die Verschlusskappen sind meist symmetrisch ausgebildet und weisen meist eine Zylinderform auf. Die Verschlusskappen weisen dabei in Längsrichtung der Zylinderform zwei entgegengesetzte Enden auf. Es ist daher besonders vorteilhalft, wenn die erste und die zweite Orientierung ebenfalls entgegengesetzt zueinander ausgerichtet sind.

In einer weiteren Ausgestaltung des Verfahrens zum Vereinzeln und Sortieren kann vorgesehen sein, dass die Anlagefläche sich in eine Führungsrichtung erstreckt, wobei die Führungsrichtung der Richtung entspricht, in die die Verschlusskappen entlang der Anlagefläche geführt werden.

Insbesondere bestimmt die Länge der Anlagefläche, wie weit die Verschlusskappen in der Führungsrichtung geführt werden. Die Länge der Anlagefläche ist vorzugsweise mindestens so groß wie eine Breite der Sortiertaschen in der Führungsrichtung.

In einer weiteren Ausgestaltung des Verfahrens zum Vereinzeln und Sortieren kann vorgesehen sein, dass jede Sortiertasche eine Öffnung aufweist, wobei der Schritt des Führens des Weiteren aufweist, dass die Verschlusskappen aus der Öffnung der Sortiertaschen herausbewegt werden, wenn die Verschlusskappen entlang der Anlagefläche in der Führungsrichtung geführt werden.

Eine Sortiertasche umschließt meist die darin angeordnete Verschlusskappe fast vollständig. Durch die Öffnung in der Sortiertasche kann die Verschlusskappe sich aus der Sortiertasche herausbewegt werden.

In einer weiteren Ausgestaltung des Verfahrens zum Vereinzeln und Sortieren kann vorgesehen sein, dass jede der Sortiertaschen eine erste Auflageebene und eine zweite Auflageebene aufweist, wobei in dem Schritt des Transportierens die Verschlusskappen in der erster Orientierung auf der ersten Auflageebene und in der zweiten Orientierung auf der zweiten Auflageebene aufliegen, wobei ein erster Abstand von der ersten Auflageebene zu dem Anschlagelement größer ist als ein zweiter Abstand von der zweiten Auflageebene zu dem Anschlagelement.

Der erste und der zweite Abstand sind somit so wählbar, dass eine Verschlusskappe, die auf der ersten Auflageebene aufliegt nicht in Anlage an die Anlagefläche des Anschlagelements kommen kann, wohingegen eine Verschlusskappe, die auf der zweiten Auflagefläche aufliegt in Anlage an die Anlagefläche des Anschlagelements kommen kann.

In einer weiteren Ausgestaltung des Verfahrens zum Vereinzeln und Sortieren kann vorgesehen sein, dass jede der Verschlusskappen eine hohlförmige Seite und eine flache Seite aufweist, insbesondere wobei die hohlförmige Seite in der ersten Orientierung auf der ersten Auflageebene und die flache Seite in der zweiten Orientierung auf der zweiten Auflageebene aufliegt.

Die Verschlusskappen weisen meist eine Hohlzylinderform auf, wobei ein Ende geschlossen und ein anderes Ende offen ist. Das geschlossene Ende entspricht der flachen Seite und das offene Ende entspricht der hohlförmigen Seite. Dadurch lässt sich, wie bereits beschrieben, der Querschnittsverlauf der Sortiertaschen auf besonders einfache Weise gestalten, um die Verschlusskappen in einer ersten und in einer zweiten Orientierung anzuordnen.

Dadurch, dass sowohl die Verschlusskappen in der ersten Orientierung als auch die Verschlusskappen in der zweiten Orientierung ausgeschleust werden, werden keine Verschlusskappen durch das Sortieren weggeblasen. Dementsprechend ergibt sich eine Ausbeute von Verschlusskappen von 100 %. Die erste Transportstrecke dient dabei zum Abtransportieren der Verschlusskappen in der ersten Orientierung.

Die zweite Transportstrecke dient dabei zum Abtransportieren der Verschlusskappen in der zweiten Orientierung.

In einer weiteren Ausgestaltung des Verfahrens zum Vereinzeln und Sortieren kann vorgesehen sein, dass die Wendeeinrichtung als getaktete oder kontinuierliche Wendeeinrichtung ausgebildet ist.

Nach dem Wenden befinden sich die Verschlusskappen auf der ersten Transportstrecke und die Verschlusskappen auf der zweiten Transportstrecke in der gleichen Orientierung. Dies ist besonders vorteilhaft, da in der Regel gewünscht ist, dass die Verschlusskappen nur in einer bestimmten Orientierung zur weiteren Verwendung ausgerichtet sind.

In einer weiteren Ausgestaltung des Verfahrens zum Vereinzeln und Sortieren kann vorgesehen sein, dass in einem weiteren Schritt die ersten Transportstrecke und die zweiten Transportstrecke in einem zweiten Abschnitt, der stromabwärts von der Wendeeinrichtung angeordnet ist, zusammengeführt werden.

Dadurch werden die Verschlusskappen zu einem Produktstrom zusammen geführt. Dadurch wird nur eine Zuführung zu weiteren Vorrichtungen, wie beispielsweise einer Füllanlage, verwendet, was den Platzbedarf der Transportstrecken verringert.

Ausführungsformen der Erfindung sind in der Zeichnung dargestellt und werden in der nachfolgenden Beschreibung näher erläutert. Es zeigen:
- Fig. 1A: eine Draufsicht einer Ausführungsform einer Sortiereinrichtung einer Vereinzelungsvorrichtung,
- Fig. 1B: eine Draufsicht der Sortiereinrichtung in Fig. 1 mit dargestellten Verschlusskappen,
- Fig. 1C: eine Detaildarstellung der Sortiereinrichtung in Fig. 1,
- Fig. 2A: eine Seitenansicht der Sortiereinrichtung in Fig. 1,
- Fig. 2B: eine Seitenansicht der Sortiereinrichtung in Fig. 1 mit dargestellter Verschlusskappe in einer ersten Orientierung,
- Fig. 2C: eine Seitenansicht der Sortiereinrichtung in Fig. 1 mit dargestellter Verschlusskappe in einer zweiten Orientierung,
- Fig. 3: eine isometrische Ansicht einer Ausführungsform einer Vereinzelungsvorrichtung,
- Fig. 4A: eine Detailansicht einer Sortiereinrichtung der Vereinzelungsvorrichtung in Fig. 3,
- Fig. 4B: eine Rückansicht der Sortiereinrichtung in Fig. 4A,
- Fig. 4C: eine Draufsicht der Sortiereinrichtung in Fig. 4A,
- Fig. 5A: eine Detaildarstellung der Vereinzelungsvorrichtung in Fig. 3,
- Fig. 5B: eine Detaildarstellung einer Wendeeinrichtung der Vereinzelungsvorrichtung in Fig. 3,
- Fig. 5C: eine Rückansicht der Wendeeinrichtung in Fig. 5B,
- Fig. 5D: eine schematische Darstellung eines Abschnitts der Vereinzelungsvorrichtung in Fig. 3,
- Fig. 6: eine schematische Darstellung einer Ausführungsform einer Füllanlage,
- Fig. 7: eine Ausführungsform eines Verfahrens zum Z Sortieren als Teil eines Verfahrens zum Vereinzeln und Sortieren,
- Fig. 8A: eine erste Ausführungsform eines Verfahrens zum als Teil eines Verfahrens zum Vereinzeln und Sortieren,
- Fig. 8B: eine zweite Ausführungsform eines Verfahrens zum Vereinzeln als Teil eines Verfahrens zum Vereinzeln und Sortieren, und
- Fig. 9: eine Ausführungsform eines Verfahrens zum Zuführen.

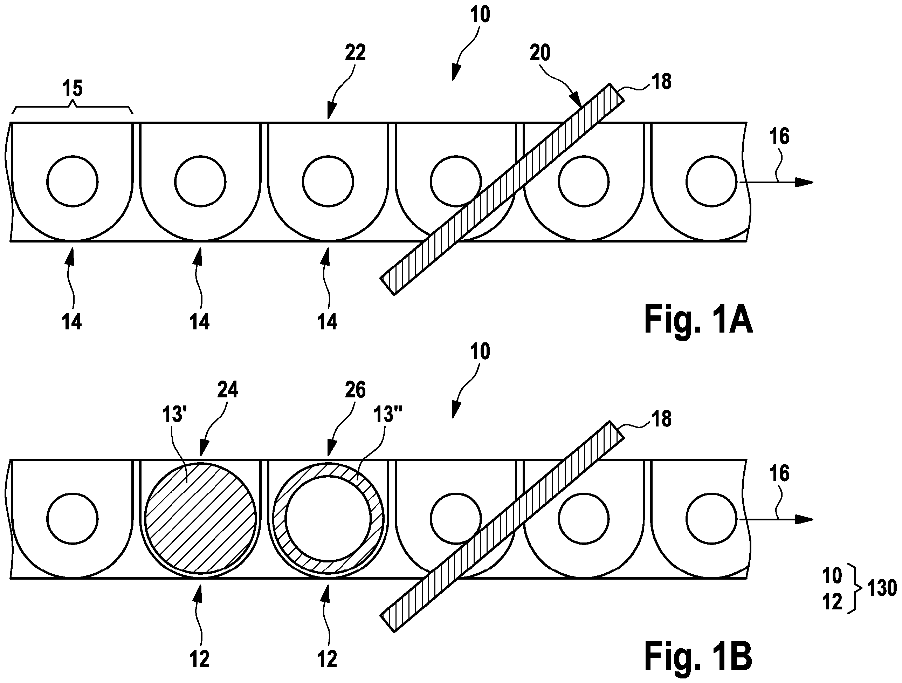

Die Fig. 1A und 1B zeigen eine Ausführungsform einer Sortiereinrichtung 10 einer Vereinzelungsvorrichtung, Die Sortiereinrichtung 10 wird insbesondere eingesetzt zum Sortieren von einer Mehrzahl von Verschlusskappen 12. Fig. 1A zeigt die Sortiereinrichtung 10 ohne Verschlusskappen 12 und die Fig. 1B zeigt die Sortiereinrichtung 10 mit Verschlusskappen 12.

Die Sortiereinrichtung 10 weist eine Mehrzahl von Sortiertaschen 14 zum Transportieren jeweils einer der Verschlusskappen 12 in einer Transportrichtung 16 auf. Jede Sortiertasche 14 weist einen Querschnittsverlauf 22 auf, der derart ausgebildet ist, dass eine Verschlusskappe 12 in der Sortiertasche 14 in einer ersten Orientierung 24 oder in einer zweiten Orientierung 26 derart positionierbar ist, dass die Verschlusskappe 12 zumindest in der zweiten Orientierung 26 aus der Sortiertasche 14 herausragt. Die erste Orientierung 24 und die zweite Orientierung 26 sind dabei verschieden. Jede Sortiertasche 14 weist des Weiteren eine Öffnung 30 auf. Die Öffnung 30 ist quer zu der Transportrichtung 16 angeordnet.

Die Sortiereinrichtung 10 weist des Weiteren ein Anschlagelement 18 mit einer Anlagefläche 20 auf. Die Anlagefläche 20 ist schräg zu der Transportrichtung 16 angeordnet. Das Anschlagelement 18 ist derart angeordnet, dass jede Verschlusskappe 12 nur in der zweiten Orientierung an der Anlagefläche 20 in Anlage kommt und entlang der Anlagefläche 20 aus der Transportrichtung 16 geführt wird. Das Anschlagelement 18 kann vorzugsweise die Form eines Balken, eines Keils oder eine andere, beliebige Form mit einer Anlagefläche 20 aufweisen. Die Anlagefläche 20 ist an einer stromaufwärts gelegenen Seite des Anschlagelements 18 angeordnet.

Jede der Verschlusskappen 12 weist eine hohlförmige Seite 13' und eine flache Seite 13" auf. Die hohlförmige Seite 13' ist in der ersten Orientierung 24 zu dem Boden der Sortiertasche 26 hin ausgerichtet. Die flache Seite 13" ist in der zweiten Orientierung 26 zu dem Boden der Sortiertasche 14 hin ausgerichtet. Die hohlförmige Seite 13' liegt entgegengesetzt zu der flachen Seite 13". Insbesondere ist ein Abstand von der hohlförmigen Seite 13' zu der flachen Seite 13" größer als eine Tiefe der Sortiertasche.

Die Fig. 1B zeigt des Weiteren ein System 130, das die Sortiereinrichtung 10 und die Mehrzahl von Verschlusskappen 12 aufweist.

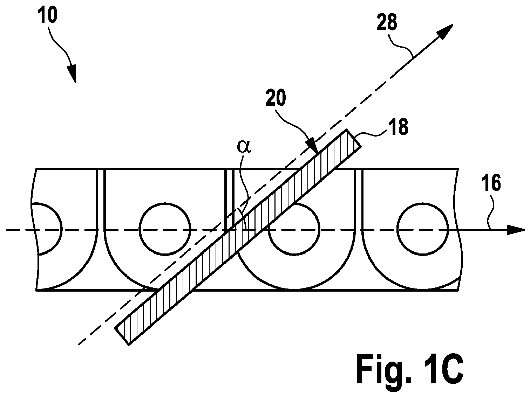

Die Fig. 1C zeigt eine Detaildarstellung der Sortiereinrichtung 10 aus den Fig. 1A und 1B. Die Anlagefläche 20 erstreckt sich in eine Führungsrichtung 28. Die Führungsrichtung 28 entspricht somit der Richtung, in die jede der Verschlusskappen 12 entlang der Anlagefläche 20 aus der Transportrichtung 16 herausgeführt wird. Die Führungsrichtung 28 schließt mit der Transportrichtung 16 einen Winkel α zwischen 0° und 90°, vorzugsweise zwischen 20° und 70°, insbesondere von 45°, ein.

Die Anlagefläche 20 weist eine Länge auf, entlang der sich die Auflagefläche 20 in die Führungsrichtung 28 erstreckt. Die Länge der Auflagefläche 20 ist die mindestens so groß, wie eine Breite der Sortiertasche 14. Vorzugsweise entspricht die Länge der Auflagefläche 20 der Breite der Sortiertasche 14. Alternativ ist die Länge der Auflagefläche 20 größer als ein Breite der Sortiertasche 14, so dass die Auflagefläche 20 sich über mindestens eine Seite der Sortiertasche hinaus erstreckt.

Die Öffnungen 30 der Sortiertaschen 14 sind derart ausgebildet, dass jede Verschlusskappe 12, die in der zweiten Orientierung 26 angeordnet ist, sich in der Führungsrichtung 28 aus der Sortiertasche 14 herausbewegt, wenn die Verschlusskappe 12 entlang der Anlagefläche 20 geführt wird.

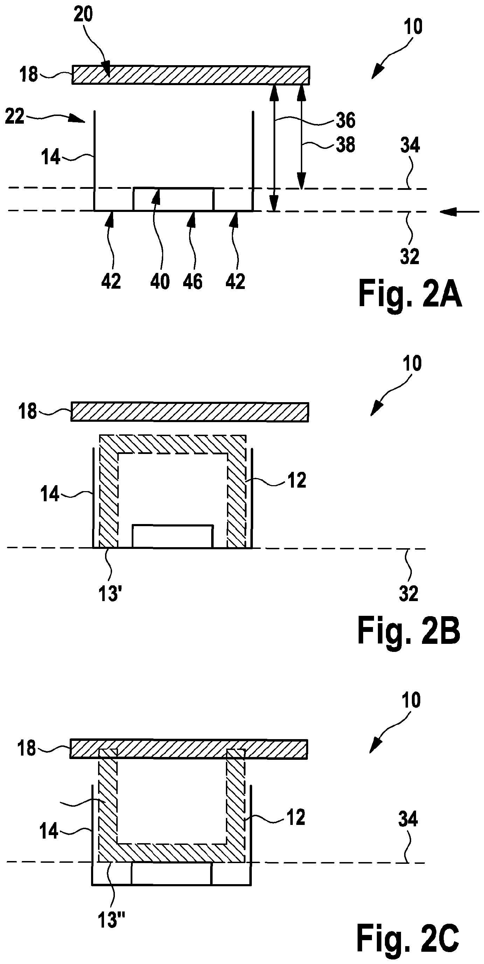

Die Fig. 2A zeigt eine Seitenansicht der Ausführungsform einer Sortiereinrichtung 10 aus den Fig. 1A-1C. Der Querschnittsverlauf 22 jeder Sortiertasche 14 stellt eine erste Auflageebene 32 und eine zweite Auflageebene 34 bereit. Ein erster Abstand 36 von der ersten Auflageebene 32 zu dem Anschlagelement 18 ist größer als ein zweiter Abstand 38 von der zweiten Auflageebene 34 zu dem Anschlagelement 18. Die erste Auflageebene 32 und die zweite Auflageebene 34 sind parallel zueinander angeordnet. Das Anschlagelement 18 ist parallel zu der ersten Auflageebene 32 und zu der zweiten Auflageebene 34 angeordnet.

Die Sortiertasche 14 weist vorzugsweise in einem Boden 46 der Sortiertasche 14. Der Boden 46 weist eine Erhebung 40 und eine Vertiefung 42 auf. Die Erhebung 40 erstreckt sich bis zu der zweiten Auflageebene 34. Die Vertiefung 42 erstreckt sich bis zu der ersten Auflageebene 32. Die Vertiefung 42 umgibt die Erhebung 40 vollständig. Die Erhebung 40 ist vorzugsweise geschlossen, insbesondere kreisförmig, dreieckig, viereckig, oder polyeckig, ausgebildet. Vorzugsweise ist die Erhebung 40 mittig in der Sortiertasche 14 angeordnet.

Vorzugsweise kann der Boden 46 der Sortiertasche 14 mindestens eine Erhebung 40 und/oder mindestens eine Vertiefung 42 aufweisen, um die erste Auflageebene 32 und die zweite Auflageebene 34 zu bilden. Die mindestens eine Erhebung 40 und/oder die mindestens eine Vertiefung 42 in dem Boden 46 der Sortiertasche 14 bilden dementsprechend einen Teil des Querschnittsverlaufs 22 der Sortiertasche 14 aus.

Alternativ kann auch eine Mantelfläche der Sortiertasche 14, die sich von dem Boden 46 der Sortiertasche 14 zu dem Anschlagelement 18 hin erstreckt, ein geeigneten Querschnittsverlauf 22 aufweisen, um die erste Auflageebene 32 und die zweite Auflageebene 34 zu bilden.

Jede der Sortiertaschen 14 weist eine Form eines Hohlzylinders auf. Die Öffnung 30 jeder Sortiertasche 14 ist in der Mantelfläche des Hohlzylinders angeordnet. Die Grundfläche der Sortiertasche 14 bzw. des Hohlzylinders weist eine U-Form auf. Der Querschnittsverlauf 22 erstreckt sich entlang der Längsachse des Hohlzylinders. Die Erhebung 40 ist symmetrisch bezüglich der Längsachse des Hohlzylinders angeordnet.

Die Fig. 2B zeigt dieselbe Ansicht einer Sortiertasche 10 wie in Fig. 2A. In der Sortiertasche 14 ist eine Verschlusskappe 12 in der ersten Orientierung 24 angeordnet. Insbesondere ist in der ersten Orientierung 24 die hohlförmige Seite 13' der Verschlusskappe 12 zu dem Boden 46 der Sortiertasche 14 ausgerichtet. Die hohlförmige Seite 13' liegt dabei in der ersten Orientierung 24 auf der ersten Auflageebene 36 auf.

Die Erhebung 40 und die Vertiefung 42 in dem Boden 46 der Sortiertasche 14 sind so ausgebildet, dass diese einer Innenkontur 44 der Verschlusskappe 12 entsprechen. Die Erhebung 40 erstreckt sich dabei in die Verschlusskappe 12 hinein. Vorzugsweise ist die Erhebung 40 so ausgebildet, dass die Verschlusskappe 12 in der ersten Orientierung 24 mit der Innenkontur 44 der Verschlusskappe 12 die Erhebung 40 umgibt.

Die Fig. 2C zeigt dieselbe Ansicht einer Sortiereinrichtung 10 wie in Fig. 2A. In der Sortiertasche 14 ist eine Verschlusskappe 12 in der zweiten Orientierung angeordnet. Die Verschlusskappe 12 liegt in der zweiten Orientierung 26 auf der Auflageebene 34 auf. Vorzugsweise liegt die Verschlusskappe 12 in der zweiten Orientierung 26 auf der Erhebung 40 auf. Insbesondere liegt die flache Seite 13" in der zweiten Orientierung 26 auf der zweiten Auflageebene 38 auf.

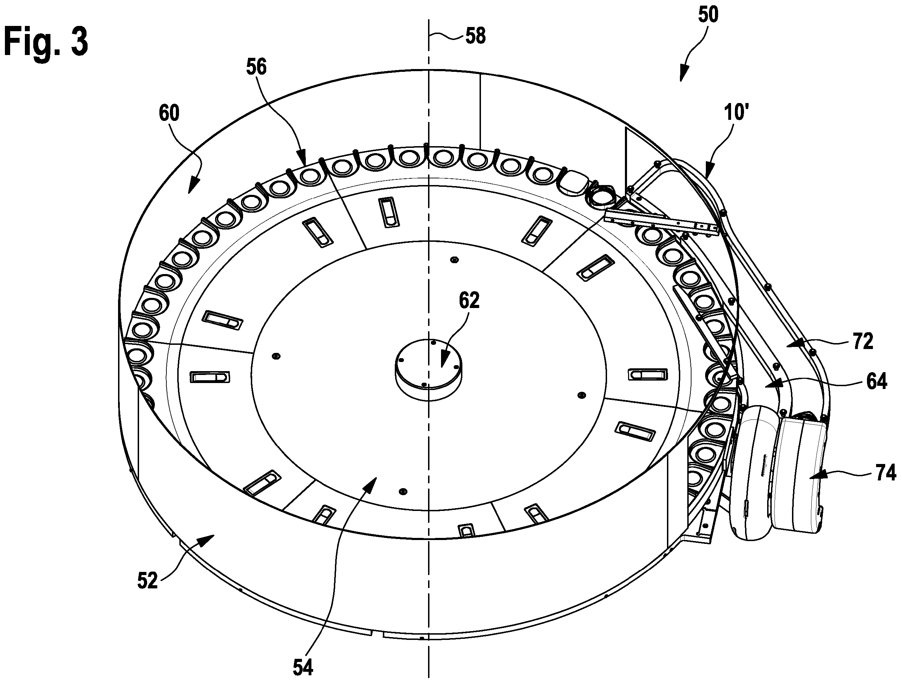

Die Fig. 3 zeigt eine Ausführungsform einer Vereinzelungsvorrichtung 50. Die Vereinzelungsvorrichtung 50 weist eine Trommel 52 zum Vereinzeln von Verschlusskappen 12 und eine Sortiereinrichtung 10' zum Sortieren der Verschlusskappen 12 auf. Die Sortiereinrichtung 10' kann vorzugsweise wie die Sortiereinrichtung 10 aus den Fig. 1A-2C ausgebildet sein.

Die Trommel 52 ist derart ausgebildet, dass jede Verschlusskappe 12 in jeweils eine Sortiertasche 14 vereinzelt wird. Dazu weist die Trommel 52 eine drehbar gelagerte Scheibe 54 auf. Eine Mehrzahl von Sortiertaschen 14 sind an einem äußeren Rand 56 der Scheibe 54 umlaufend angeordnet. Öffnungen 30 jeder Sortiertasche 14 sind radial außen angeordnet. Die Scheibe 54 ist senkrecht zu einer Längsachse 58 der Trommel 52 ausgerichtet. Der äußere Rand 56 der Scheibe 54 grenzt an eine Mantelfläche 60 der Trommel 52 an. Die Sortiertaschen 14 grenzen ebenfalls an die Mantelfläche 60 der Trommel 52 an. Die Scheibe 54 ist an einem Ende der Trommel 52 angeordnet.

Die Vereinzelungsvorrichtung 50 weist des Weiteren eine Antriebseinheit 62 zum Drehen der Scheibe 54 um die Längsachse 58 der Trommel 52 auf. Die Antriebseinheit 62 ist vorzugsweise außerhalb der Trommel 52 angeordnet. Die Drehrichtung der Scheibe 54 entspricht einer Transportrichtung 16 der Verschlusskappen 12, die in den Sortiertaschen 14 angeordnet sind

Die Vereinzelungsvorrichtung 50 weist des Weiteren eine erste Transportstrecke 64 zum Abtransportieren der Verschlusskappen 12, die in der ersten Orientierung 24 angeordnet sind, und eine zweite Transportstrecke 72 zum Abtransportieren der Verschlusskappen 12, die in der zweiten Orientierung 26 angeordnet sind, auf.

Die Vereinzelungsvorrichtung 50 weist des Weiteren eine Wendeeinrichtung 74 auf, die die Orientierung der Verschlusskappen 12 auf der zweiten Transportstrecke 72 ändert. Dabei werden die Verschlusskappen 12 so gewendet, dass sich die Orientierung der Verschlusskappen 12 von der zweiten Orientierung 26 zur ersten Orientierung 24 ändert.

Vorzugsweise ist eine Längsachse 58 der Trommel 52 gegenüber einer vertikalen Richtung, die der Richtung der Schwerkraft entspricht, um einen Winkel β geneigt, insbesondere wobei der Winkel β zwischen 0° und 90°, vorzugsweise zwischen 20° und 70°, insbesondere von 45°, beträgt. Die Scheibe 54 weist somit eine obere Hälfte und eine untere Hälfte auf, wobei oben und unten bezüglich der Schwerkraft definiert sind. Vorzugsweise ist die Sortiereinrichtung 10' in der oberen Hälfte der Scheibe 54 angeordnet.

Vorzugsweise weist die Mantelfläche 60 der Trommel 52 im Bereich der Sortiereinrichtung 10' eine Aussparung auf, die mindestens der Größe der Sortiereinrichtung 10' entspricht. Dadurch könne die Verschlusskappen 12 nur in diesem Bereich der Trommel 52 aus der Trommel 52 herausgeführt werden.

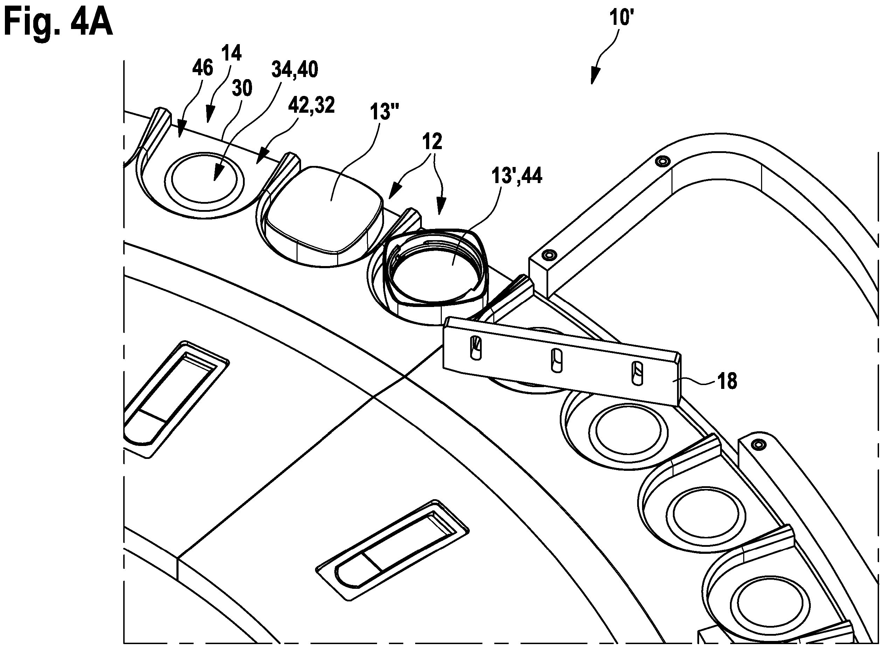

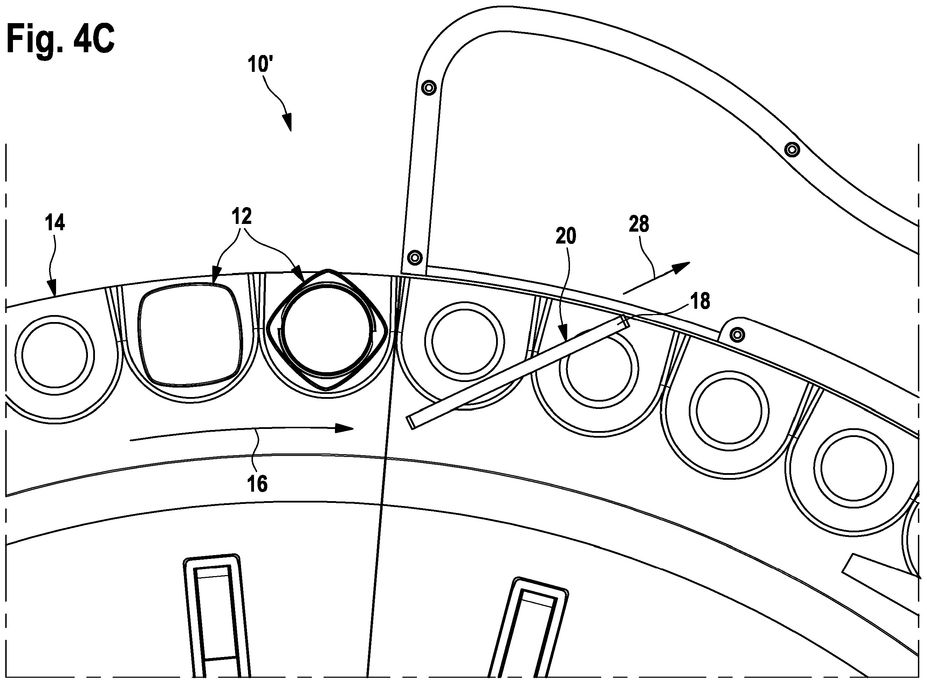

Die Fig. 4A-4C zeigen eine Detaildarstellung der Sortiereinrichtung 10' der Vereinzelungsvorrichtung 50 aus Fig. 3. Die Sortiereinrichtung 10' weist hierbei dieselben Komponenten auf wie die Sortiereinrichtung 10 aus den Fig. 1A-2C. Lediglich die Transportrichtung 16 der Verschlusskappen 12 ist in der Sortiereinrichtung 10' umlaufend statt linear dargestellt. Dies ist insbesondere in Fig. 4C dargestellt.

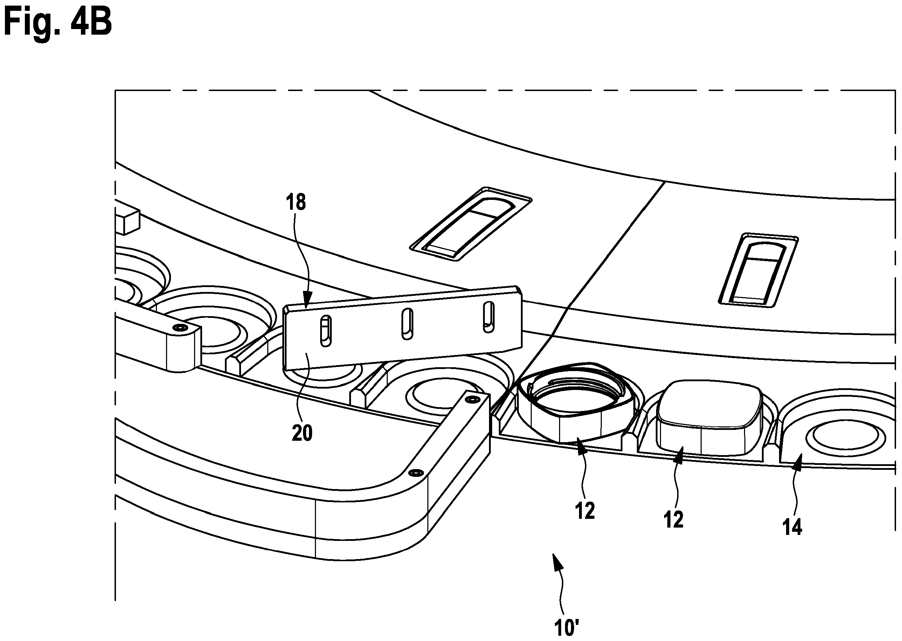

In den isometrischen Ansichten der Fig. 4A und 4B ist der Querschnittsverlauf 22 in der Sortiertaschen 14 detailliert dargestellt. Dieser entspricht dem in den Fig. 2A bis 2C beschriebenen Querschnittsverlauf 22 mit der Erhebung 40 und der Vertiefung 42 an dem Boden 46 der Sortiertasche.

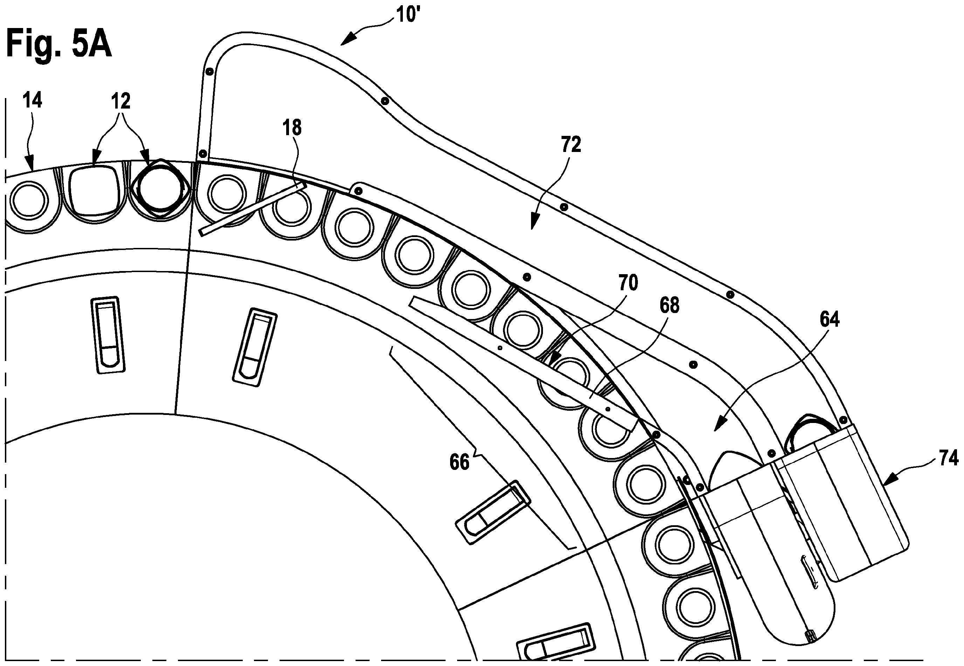

Die Fig. 5A zeigt eine Detailansicht der Transportstrecken 64, 72 der Vereinzelungsvorrichtung 50 aus Fig. 3.

Die Vereinzelungsvorrichtung 50 weist einen ersten Abschnitt 66 auf, der stromabwärts von dem Anschlagelement 18 der Sortiereinrichtung 10' angeordnet ist. In dem ersten Abschnitt 66 werden die Verschlusskappen 12 jeweils auf die erste Transportstrecke 64 geführt, so dass die Verschlusskappen 12 auf der ersten Transportstrecke 64 in der ersten Orientierung 24 ausgerichtet sind. Dazu weist die Vereinzelungsvorrichtung 50 in dem ersten Abschnitt 66 vorzugsweise ein weiteres Anschlagelement 68 mit einer weiteren Anlagefläche 70 auf. Die weitere Anlagefläche 70 ist schräg zu der Transportrichtung 16 angeordnet. Das weitere Anschlagelement 68 ist derart angeordnet, dass jede Verschlusskappe 12 in der ersten Orientierung 24 an der weiteren Anlagefläche 70 in Anlage kommt und entlang der Anlagefläche 70 auf die erste Transportstrecke 64 geführt wird.

Alternativ oder zusätzlich können der erste Abschnitt 66 der Trommel 52 und die erste Transportstrecke 64 derart angeordnet sind, dass die Schwerkraft die Verschlusskappen 12 aus den Sortiertaschen 14 auf die erste Transportstrecke 64 herausgleiten lässt. Dazu kann der Abschnitt 66 in der unteren Hälfte der Scheibe der Scheibe 54 angeordnet sein.

Vorzugsweise erstreckt sich die Aussparung der Mantelfläche 60 über den gesamten ersten Abschnitt 66, so dass auch die Verschlusskappen 12 in der ersten Orientierung 24 aus der Trommel 52 herausgeführt werden können.

Das Anschlagelement 18 der Sortiereinrichtung 10' ist derart angeordnet, dass jede Verschlusskappe 12 in der zweiten Orientierung 26 entlang der Anlagefläche 20 auf die zweite Transportstrecke 72 geführt wird, so dass die Verschlusskappen 12 auf der zweiten Transportstrecke 72 in der zweiten Orientierung 26 ausgerichtet sind.

In einem nicht beanspruchten alternativen Beispiel kann vorgesehen sein, dass die zweite Transportstrecke 70 derart ausgebildet ist, dass sie die Verschlusskappen 12 in das Innere der Trommel 52 zurückführt.

Vorzugsweise sind die erste Transportstrecke 64 bzw. die zweite Transportstrecke 72 derart ausgebildet, dass die Verschlusskappen 12 mittels der Schwerkraft entlang der ersten Transportstrecke 64 bzw. der zweiten Transportstrecke 72 bewegt werden. Dazu können die erste Transportstrecke 64 und die zweite Transportstrecke 72geneigt sein.

Alternativ oder zusätzlich kann die Vereinzelungsvorrichtung (50) eine pneumatische Düseneinrichtung aufweisen, die derart ausgebildet ist, dass sie eine Luftströmung erzeugt, mittels der die Verschlusskappen (12) entlang der ersten Transportstrecke (64) bzw. der zweiten Transportstrecke (72) bewegt werden.

Die Wendeeinrichtung 74 ist dazu ausgebildet, die Orientierung der Verschlusskappen 12 auf der zweiten Transportstrecke 72 zu ändern, so dass die Verschlusskappen 12 von der zweiten Orientierung 26 in die erste Orientierung 24 gewendet werden. Vorzugsweise ist die Wendeeinrichtung 74 als kontinuierliche Wendeeinrichtung ausgebildet.

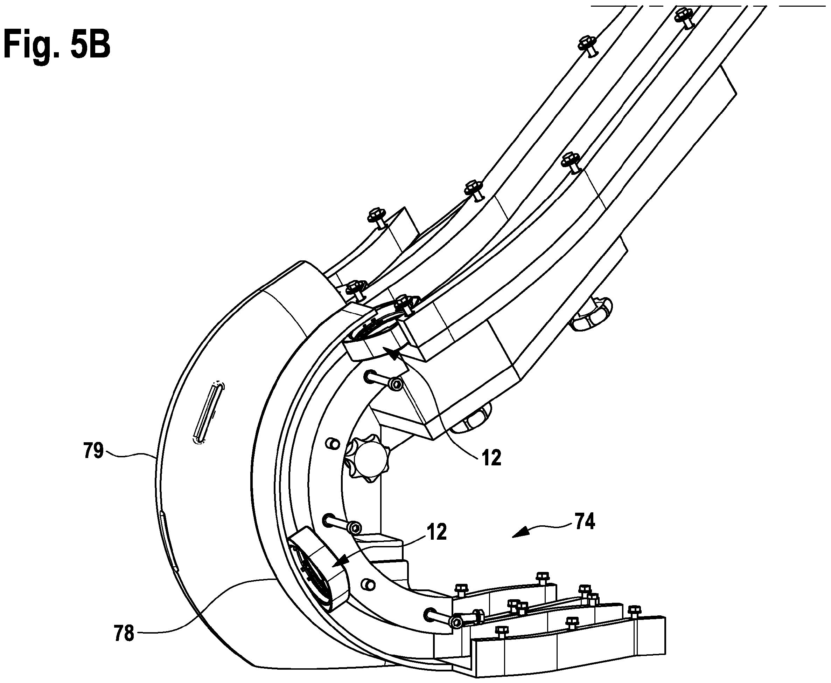

Die Fig. 5B zeigt die Wendeeinrichtung 74 in einer Detaildarstellung. Die Wendeeinrichtung 74 bildet einen zweiten Wendeabschnitt 78 der zweiten Transportstrecke 72 aus, in dem sich allein durch den Verlauf des zweiten Wendeabschnitts 78 die Orientierung der Verschlusskappen 12 auf der zweiten Transportstrecke 72 ändert. Der zweiten Wendeabschnitt 78 ist so ausgebildet, dass die Verschlusskappen 12 auf beiden Seiten, insbesondere der flachen Seite 13" und der hohlförmigen Seite 13', geführt werden. Dazu ist der zweiten Wendeabschnitt 78 in der dargestellten Ausführungsform röhrenförmig ausgebildet.

Der zweite Wendeabschnitt 78 ist insbesondere als Bogenabschnitt ausgebildet sein. Der Bogenabschnitt ist so ausgebildet, dass die Transportstrecke 72 um eine Querachse gedreht ist, die senkrecht zu der Transportrichtung der Verschlusskappen 12 verläuft Dadurch werden die Verschlusskappen 12 ebenfalls um eine Querachse gedreht, die senkrecht zu der Transportrichtung der Verschlusskappen 12 verläuft und ändern dadurch ihre Orientierung. Ein Bogenabschnitt kann insbesondere einen halben Looping bilden.

Alternativ kann der zweite Wendeabschnitt 78 auch als tordierender Abschnitt ausgebildet sein. Der tordierende Abschnitt ist so ausgebildet, dass die Transportstrecke 72 um eine Längsachse gedreht ist, die parallel zu der Transportrichtung der Verschlusskappen 12 verläuft Dadurch werden die Verschlusskappen 12 ebenfalls um eine Längsachse gedreht, die parallel zu der Transportrichtung der Verschlusskappen 12 verläuft und ändern dadurch ihre Orientierung.

Alternativ kann die Wendeeinrichtung 74 auch als getaktete Wendeeinrichtung ausgebildet sein. Die getaktete Wendeeinrichtung kann beispielsweise mechanische Komponenten, insbesondere einen Roboterarm mit Greifvorrichtung, aufweisen, die die Verschlusskappen 12 auf der zweiten Transportstrecke greifen, anheben und wenden.

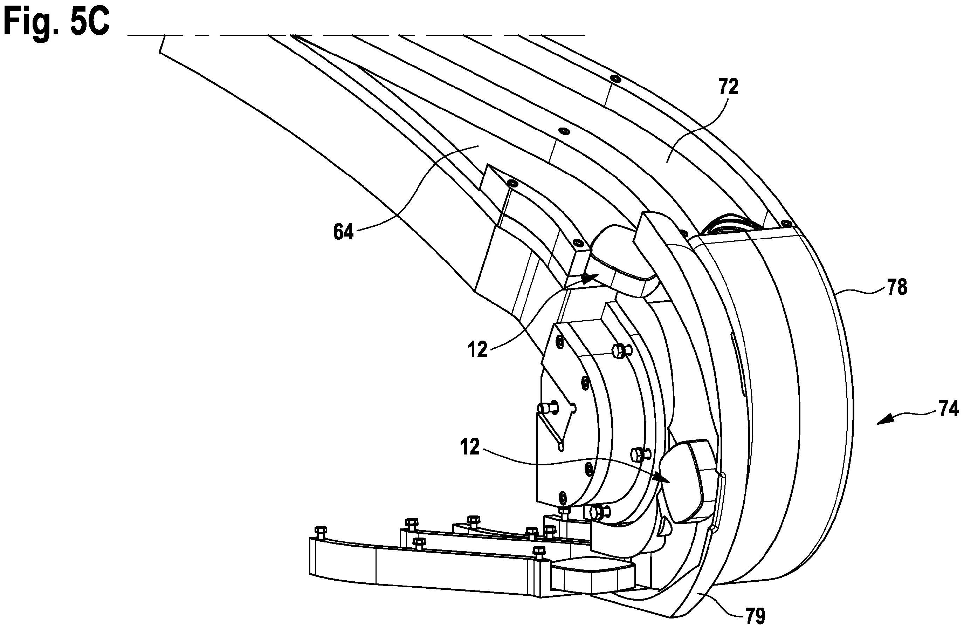

Die Fig. 5C zeigt eine Rückansicht der Wendeeinrichtung 74 aus Fig. 5B. Die erste Transportstrecke 64 und die zweite Transportstrecke 72 verlaufen parallel zueinander. Die erste Transportstrecke 64 weist ebenfalls einen ersten, als Bogenabschnitt ausgebildeten Wendeabschnitt 79 auf. Der erste Wendeabschnitt 79 ist so ausgebildet, dass sich die Orientierung der Verschlusskappen 12 auf der ersten Transportstrecke 64 nicht ändert. Dazu ist der Bogenabschnitt zusätzlich tordierend ausgebildet. Der Wendeabschnitt 79 weist somit eine Drehung um eine Längsachse und eine Querachse auf. Dadurch werden die Verschlusskappen 12 ebenfalls um eine Querachse und eine Längsachse gedreht, so dass die Verschlusskappen 12 ihre Orientierung behalten. In anderen Worten bleibt die Orientierung der Verschlusskappen 12 auf der ersten Transportstrecke 64 vor und nach dem ersten Wendeabschnitt 79 gleich.

In einer alternativen Ausführungsform kann die Wendeeinrichtung 74 stattdessen ausgebildet sein, die Orientierung der Verschlusskappen 12 auf der ersten Transportstrecke 64 zu ändern. Dazu kann beispielsweise der erste Wendeabschnitt 79 so ausgebildet sein, dass er die Orientierung der Verschlusskappen 12 ändert. Der zweite Wendeabschnitt 78 ist dann dementsprechend so ausgebildet, dass er die Orientierung der Verschlusskappen 12 nicht ändert.

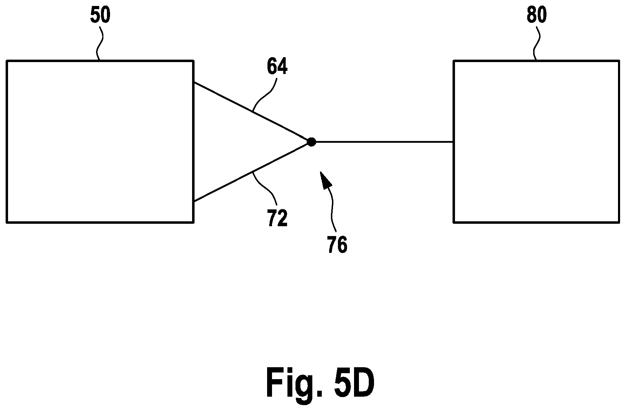

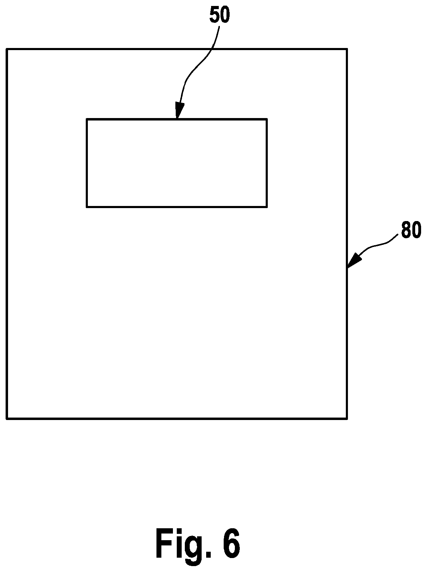

Die Fig. 5D zeigt in schematischer Ansicht einen Übergangsbereich zwischen der Vereinzelungsvorrichtung 50 aus den Fig. 3-5C und einer Füllanlage 80 gemäß Fig. 6. Die Vereinzelungsvorrichtung 50 weist des Weiteren einen zweiten Abschnitt 76 auf, der stromabwärts von der Wendeeinrichtung 74 gelegen ist. In dem zweiten Abschnitt 76 werden die erste Transportstrecke 64 und die zweite Transportstrecke 72 zusammengeführt. Dadurch können die Verschlusskappen 12, die nach der Wendeeinrichtung 74 alle dieselbe Orientierung aufweisen, vorzugsweise die erste Orientierung 24, zu einem Produktstrom zusammengeführt werden. Die Verschlusskappen 12 können somit in einem Produktstrom der Füllanlage 80 zugeführt werden.

Die Fig. 6 zeigt eine Ausführungsform einer Füllanlage 80. Die Füllanlage 80 weist dabei eine Vereinzelungsvorrichtung 50 auf. Die Vereinzelungsvorrichtung kann gemäß der Ausführungsform aus den Fig. 3-5a ausgebildet sein. Die Vereinzelungsvorrichtung 50 ist des Weiteren dazu ausgebildet, die Verschlusskappen 12 der Füllanlage 80 zuzuführen.

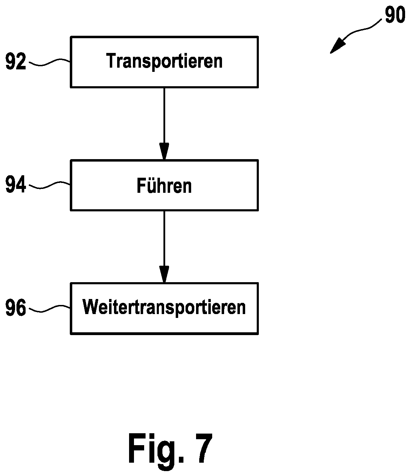

Die Fig. 7 zeigt eine Ausführungsform eines Verfahrens 90 zum Sortieren als Teil eines Verfahrens zum Vereinzeln und Sortieren einer Mehrzahl von Verschlusskappen 12.

In einem ersten Schritt 92 des Verfahrens 90 wird jeweils eine der Verschlusskappen 12 in einer Transportrichtung 16 in einer Mehrzahl von Sortiertaschen 14 transportiert. Ein Querschnittsverlauf 22 jeder der Sortiertaschen 14 ist derart ausgebildet, dass eine Verschlusskappe 12 in der Sortiertasche 14 in einer ersten Orientierung oder in einer zweiten Orientierung derart positionierbar ist, dass die Verschlusskappe 12 zumindest in der zweiten Orientierung 26 aus der Sortiertasche 14 herausragt. Die Verschlusskappen 12 sind jeweils in den Sortiertaschen 14 in der ersten Orientierung 24 oder in der zweiten Orientierung 26 positioniert.

Vorzugsweise sind die erste Orientierung 24 und die zweite Orientierung 26 entgegengesetzt zueinander ausgerichtet.

Vorzugsweise weist jede der Sortiertaschen 14 eine erste Auflageebene 32 und eine zweite Auflageebene 34 auf. Der Schritt des Transportierens 92 weist des Weiteren auf, dass die Verschlusskappen 12 in der ersten Orientierung 24 auf der ersten Auflageebene 32 und in der zweiten Orientierung 26 auf der zweiten Auflageebene 34 aufliegen.

Vorzugsweise weist jede der Verschlusskappen 12 eine hohlförmige Seite 13' und eine flache Seite 13" auf. Die hohlförmige Seite 13' liegt in der ersten Orientierung 24 auf der ersten Auflageebene 36 auf. Die flache Seite 13" liegt in der zweiten Orientierung 26 auf der zweiten Auflageebene 38 auf.

In einem weiteren Schritt 94 des Verfahrens 90 werden nur die Verschlusskappen 12, die in der zweiten Orientierung 26 ausgerichtet sind, entlang einer Anlagefläche 20 eines Anschlagelements 18 aus der Transportrichtung 16 geführt. Die Anlagefläche 20 ist schräg zu der Transportrichtung 16 angeordnet. Das Anschlagelement 18 ist derart angeordnet, dass die Verschlusskappe 12 nur in der zweiten Orientierung 26 an der Anlagefläche 20 in Anlage kommt.

Vorzugsweise erstreckt sich die Anlagefläche 20 in eine Führungsrichtung 28. Die Führungsrichtung 28 entspricht der Richtung, in die die Verschlusskappen 12 entlang der Anlagefläche 20 geführt werden.

Vorzugsweise werden die Verschlusskappen 12 aus einer Öffnung 30 der Sortiertaschen 14 herausbewegt, wenn die Verschlusskappen entlang der Anlagefläche 20 in der Führungsrichtung 28 geführt werden.

Vorzugsweise ist ein erster Abstand 36 von der ersten Auflageebene 32 zu dem Anschlagelement 18 größer als ein zweiter Abstand 38 von der zweiten Auflageebene 34 zu dem Anschlagelement 18.

In einem weiteren Schritt 96 des Verfahrens 90 werden die Verschlusskappen 12, die in der ersten Orientierung 24 ausgerichtet sind, in der Transportrichtung 16 in der Mehrzahl von Sortiertaschen 14 weitertransportiert.

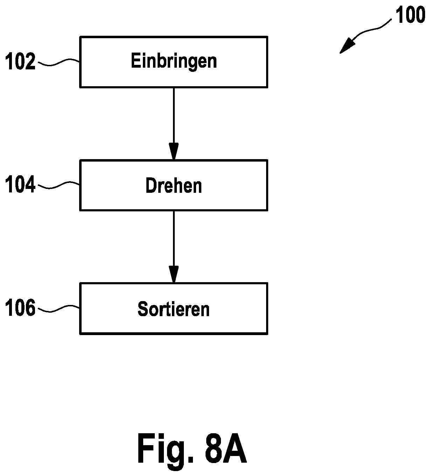

Die Fig. 8A zeigt eine erste Ausführungsform eines Verfahrens 100 zum Vereinzeln als Teil eines Verfahrens zum Vereinzeln und Sortieren von Verschlusskappen 12.

In einem ersten Schritt 102 des Verfahrens 100 werden die Verschlusskappen 12 in eine Trommel 52 eingebracht. Die Trommel 52 weist eine drehbar gelagerte Scheibe auf. Eine Mehrzahl von Sortiertaschen 14 sind an einem äußeren Rand 56 der Scheibe 54 umlaufend angeordnet.

In einem weiteren Schritt 104 des Verfahrens 100 wird die Scheibe 54 um eine Längsachse 58 der Trommel 52 gedreht, um die Verschlusskappen 12 in den Sortiertaschen 14 zu vereinzeln. Dabei wird vorzugsweise jede Verschlusskappe 12 in jeweils eine Sortiertasche 14 vereinzelt.

In einem weiteren Schritt 106 des Verfahrens 100 werden die Verschlusskappen 12 sortiert. Vorzugsweise werden die Verschlusskappen 12 mittels des Verfahrens 90 zum Sortieren gemäß Fig. 7 sortiert.

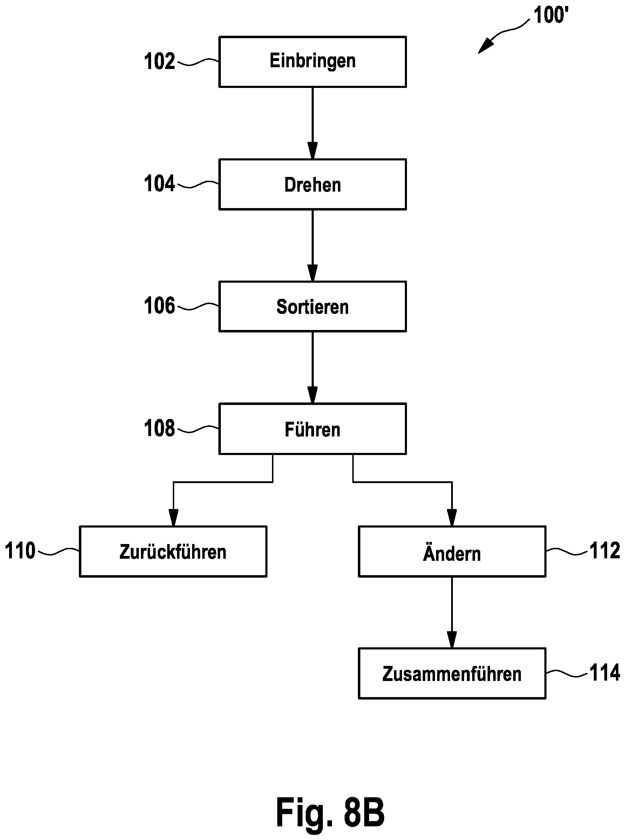

Die Fig. 8B zeigt eine zweite Ausführungsform eines Verfahrens 100' zum Vereinzeln von Verschlusskappen 12 als Teil eines Verfahrens zum Vereinzeln und Sortieren. Das Verfahren 100' weist dieselben Schritte 102, 104, 106 wie das Verfahren 100 aus der Fig. 8A auf.

In einem weiteren Schritt des Verfahrens 100' werden nur die Verschlusskappen 12, die in der ersten Orientierung 24 ausgerichtet sind, aus der Transportrichtung 16 in einem ersten Abschnitt 66 auf eine erste Transportstrecke 64 geführt, so dass die Verschlusskappen 12 auf der ersten Transportstrecke 64 in der ersten Orientierung 24 ausgerichtet sind. Der erste Abschnitt 66 ist stromabwärts von dem Anschlagelement 18 angeordnet.

In dem Schritt des Führens 94 des Verfahrens 90 zum Sortieren 106 die Verschlusskappen 12 auf eine zweite Transportstrecke 72 geführt, so dass die Verschlusskappen 12 auf der zweiten Transportstrecke 72 in der zweiten Orientierung 26 ausgerichtet sind.

In einer nicht beanspruchten Ausführungsform werden in einem weiteren Schritt 110 des Verfahrens 100' die Verschlusskappen mittels der zweiten Transportstrecke 72 in das Innere der Trommel 52 zurückgeführt.

In einem weiteren Schritt 112 des Verfahrens 100' wird die Orientierung der Verschlusskappen 12 auf der zweiten Transportstrecke 52 mittels einer Wendeeinrichtung 74 geändert, so dass die Verschlusskappen 12 von der zweiten Orientierung 26 in die erste Orientierung 24 gewendet werden. Die Wendeeinrichtung kann vorzugsweise als getaktete oder kontinuierliche Wendeeinrichtung ausgebildet sein.

In einem weiteren Schritt 114 des Verfahrens 100' werden die erste Transportstrecke 64 und die zweite Transportstrecke 72 in einem zweiten Abschnitt 76 zusammengeführt. Der zweite Abschnitt 76 ist stromabwärts von der Wendeeinrichtung 74 angeordnet.

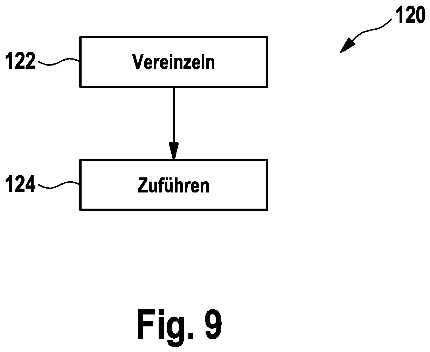

Die Fig. 9 zeigt eine Ausführungsform eines Verfahrens 120 zum Zuführen einer Mehrzahl von Verschlusskappen 12 zu einer Füllanlage 80.

In einem ersten Schritt 122 des Verfahrens 120 werden die Verschlusskappen 12 mittels des Verfahrens 100 gemäß den Fig. 8A und 8B vereinzelt.

In einem weiteren Schritt 124 des Verfahrens 120 werden die vereinzelten Verschlusskappen 12 der Füllanlage 80 durch die erste Transportstrecke 64 und die zweite Transportstrecke 72 der Füllanlage 80 zugeführt.

## Patentansprüche

1. Vereinzelungsvorrichtung (50) mit einer Trommel (52) zum Vereinzeln von Verschlussklappen (12) und einer Sortiereinrichtung (10) zum Sortieren von einer Mehrzahl von Verschlusskappen (12), wobei die Sortiereinrichtung (10) eine Mehrzahl von Sortiertaschen (14) zum Transportieren jeweils einer der Verschlusskappen (12) in einer Transportrichtung (16) und ein Anschlagelement (18) mit einer Anlagefläche (20) aufweist, wobei ein Querschnittsverlauf (22) jeder der Sortiertaschen (14) derart ausgebildet ist, dass eine Verschlusskappe (12) in der Sortiertasche (14) in einer ersten Orientierung (24) oder in einer zweiten Orientierung (26) derart positionierbar ist, dass die Verschlusskappe (12) zumindest in der zweiten Orientierung (26) aus der Sortiertasche (14) herausragt, wobei die erste Orientierung (24) und die zweite Orientierung (26) verschieden sind, und wobei die Anlagefläche (20) schräg zu der Transportrichtung (16) angeordnet ist, wobei das Anschlagelement (18) derart angeordnet ist, dass die Verschlusskappe (12) nur in der zweiten Orientierung (26) an der Anlagefläche (20) in Anlage kommt und entlang der Anlagefläche (20) aus der Transportrichtung (16) geführt wird, wobei die Trommel (52) derart ausgebildet ist, dass jede Verschlusskappe (12) in jeweils eine Sortiertasche (14) vereinzelt wird, wobei die Vereinzelungsvorrichtung (50) eine erste Transportstrecke (64) und einen ersten Abschnitt (66) aufweist, wobei der erste Abschnitt (66) stromabwärts von dem Anschlagelement (18) angeordnet ist und der derart ausgebildet ist, dass die Verschlusskappen (12) jeweils auf die erste Transportstrecke (64) geführt werden, so dass die Verschlusskappen (12) auf der ersten Transportstrecke (64) in der ersten Orientierung (24) ausgerichtet sind, wobei die Vereinzelungsvorrichtung (50) in dem ersten Abschnitt (66) ein weiteres Anschlagelement (68) mit einer weiteren Anlagefläche (70) aufweist, wobei die weitere Anlagefläche (70) schräg zu der Transportrichtung (16) angeordnet ist, wobei das weitere Anschlagelement (68) derart angeordnet ist, dass jede Verschlusskappe (12) in der ersten Orientierung (24) an der weiteren Anlagefläche (70) in Anlage kommt und entlang der Anlagefläche (70) auf die erste Transportstrecke (64) geführt wird, wobei eine Längsachse (58) der Trommel (52) gegenüber einer vertikalen Richtung, die der Richtung der Schwerkraft entspricht, um einen Winkel β geneigt ist,
**dadurch gekennzeichnet, dass**
die Vereinzelungsvorrichtung (50) eine zweite Transportstrecke (72) aufweist, wobei das Anschlagelement (18) derart angeordnet ist, dass jede Verschlusskappen (12) in der zweiten Orientierung entlang der Anlagefläche (20) auf die zweite Transportstrecke (72) geführt wird, so dass die Verschlusskappen (12) auf der zweiten Transportstrecke (72) in der zweiten Orientierung (26) ausgerichtet sind, wobei die Vereinzelungsvorrichtung (50) eine Wendeeinrichtung (74) aufweist, die dazu ausgebildet ist, die Orientierung (24, 26) der Verschlusskappen (12) auf der zweiten Transportstrecke (72) zu ändern, so dass die Verschlusskappen (12) von der zweiten Orientierung (26) in die erste Orientierung (24) gewendet werden.

2. Vereinzelungsvorrichtung nach Anspruch 1, **dadurch gekennzeichnet, dass** die erste Orientierung (24) und die zweite Orientierung (26) entgegengesetzt zueinander sind.

3. Vereinzelungsvorrichtung nach Anspruch 1 oder 2, **dadurch gekennzeichnet, dass** der Querschnittsverlauf (22) jeder Sortiertasche (14) eine erste Auflageebene (32) und eine zweite Auflageebene (34) bereitstellt, die derart ausgebildet sind, dass die Verschlusskappe (12) in der erster Orientierung (24) auf der ersten Auflageebene (32) und in der zweiten Orientierung (26) auf der zweiten Auflageebene (34) aufliegt, und wobei ein erster Abstand (36) von der ersten Auflageebene (32) zu dem Anschlagelement (18) größer ist als ein zweiter Abstand (38) von der zweiten Auflageebene (34) zu dem Anschlagelement (18), insbesondere wobei die erste Auflageebene (32) und die zweite Auflageebene (34) parallel zueinander angeordnet sind.

4. Vereinzelungsvorrichtung nach einem der Ansprüche 1 bis 3, **dadurch gekennzeichnet, dass** die Anlagefläche (20) sich in eine Führungsrichtung (28) erstreckt, wobei die Führungsrichtung (28) der Richtung entspricht, in die die Verschlusskappe (12) entlang der Anlagefläche (20) aus der Transportrichtung (16) herausgeführt wird, insbesondere wobei die Sortiertasche (14) eine Öffnung (30) aufweist, die derart ausgebildet ist, dass die Verschlusskappe (12) in der Führungsrichtung (28) sich aus der Sortiertasche (14) herausbewegt, wenn die Verschlusskappe (12) entlang der Anlagefläche (20) geführt wird.

5. Vereinzelungsvorrichtung nach Anspruch 4, **dadurch gekennzeichnet, dass** die Führungsrichtung (28) mit der Transportrichtung (16) einen Winkel α zwischen 0° und 90°, vorzugsweise zwischen 20° und 70°, insbesondere von 45°, einschließt.

6. Vereinzelungsvorrichtung nach einem der Ansprüche 1 bis 5, **dadurch gekennzeichnet, dass** die Trommel (52) eine drehbar gelagerte Scheibe (54) aufweist, wobei die Mehrzahl von Sortiertaschen (14) an einem äußeren Rand (56) der Scheibe (54) umlaufend angeordnet sind, und wobei die Vereinzelungsvorrichtung (50) eine Antriebseinheit (62) zum Drehen der Scheibe (54) um eine Längsachse (58) der Trommel (52) aufweist, wobei die Transportrichtung (16) der Drehrichtung der Scheibe (54) entspricht.

7. Vereinzelungsvorrichtung nach einem der Ansprüche 1 bis 6 **dadurch gekennzeichnet, dass** die Wendeeinrichtung (74) als getaktete oder kontinuierliche Wendeeinrichtung ausgebildet ist.

8. Vereinzelungsvorrichtung nach einem der Ansprüche 1 bis 7, **dadurch gekennzeichnet, dass** die Vereinzelungsvorrichtung (50) einen zweiten Abschnitt (76) aufweist, der stromabwärts von der Wendeeinrichtung (74) gelegenen ist und in dem die erste Transportstrecke (64) und die zweite Transportstrecke (72) zusammen geführt werden.

9. Vereinzelungsvorrichtung nach einem der Ansprüche 1 bis 8, **dadurch gekennzeichnet, dass** der Winkel β zwischen 0° und 90°, vorzugsweise zwischen 20° und 70°, insbesondere von 45°, beträgt.

10. Vereinzelungsvorrichtung nach einem der Ansprüche 1 bis 9, **dadurch gekennzeichnet, dass** das die erste Transportstrecke (64) und/oder die zweite Transportstrecke (72) derart ausgebildet sind, dass die Verschlusskappen (12) mittels der Schwerkraft entlang der ersten Transportstrecke (64) bzw. der zweiten Transportstrecke (72) bewegt werden.

11. Vereinzelungsvorrichtung nach einem der Ansprüche 1 bis 10, **dadurch gekennzeichnet, dass** die Vereinzelungsvorrichtung (50) eine pneumatische Düseneinrichtung aufweist, die derart ausgebildet ist, dass sie eine Luftströmung erzeugt, mittels der die Verschlusskappen (12) entlang der ersten Transportstrecke (64) bzw. der zweiten Transportstrecke (72) bewegt werden.

12. Füllanlage (80) mit einer Vereinzelungsvorrichtung (50) nach einem der Ansprüche 1 bis 11, wobei die Vereinzelungsvorrichtung (50) dazu ausgebildet ist, die Verschlusskappen (12) der Füllanlage (80) zuzuführen.

13. Verfahren (100) zum Vereinzeln und Sortieren von Verschlusskappen (12), wobei das Verfahren (100) die folgenden Schritte aufweist:
- Einbringen (102) der Verschlusskappen (12) in eine Trommel (52), die eine drehbar gelagerte Scheibe (54) aufweist, wobei eine Mehrzahl von Sortiertaschen (14) an einem äußeren Rand (56) der Scheibe (54) umlaufend angeordnet sind;
- Drehen (104) der Scheibe (54) um eine Längsachse (58) der Trommel (52), um die Verschlusskappen (12) in den Sortiertaschen (14) zu vereinzeln, wobei die Längsachse (58) der Trommel (52) gegenüber einer vertikalen Richtung, die der Richtung der Schwerkraft entspricht, um einen Winkel β geneigt ist;
- Transportieren (92) von jeweils einer der Verschlusskappen (12) in einer Transportrichtung (16) in jeweils einer der Sortiertaschen (14), wobei ein Querschnittsverlauf (22) jeder der Sortiertaschen (14) derart ausgebildet ist, dass eine Verschlusskappe (12) in der Sortiertasche (14) in einer ersten Orientierung (24) oder in einer zweiten Orientierung (26) derart positionierbar ist, dass die Verschlusskappe (12) zumindest in der zweiten Orientierung (26) aus der Sortiertasche (14) herausragt, wobei die Verschlusskappen (12) jeweils in den Sortiertaschen in der ersten Orientierung (24) oder in der zweiten Orientierung (26) positioniert sind;
- Führen (94) nur der Verschlusskappen (12), die in der zweiten Orientierung (26) ausgerichtet sind, entlang einer Anlagefläche (20) eines Anschlagelements (18) aus der Transportrichtung (16), wobei die Anlagefläche (20) schräg zu der Transportrichtung (16) angeordnet ist, wobei das Anschlagelement (18) derart angeordnet ist, dass die Verschlusskappe (12) nur in der zweiten Orientierung (26) an der Anlagefläche (20) in Anlage kommt, wobei jede Verschlusskappe (12) in der zweiten Orientierung entlang der Anlagefläche (20) auf eine zweite Transportstrecke (72) geführt wird, so dass die Verschlusskappen (12) auf der zweiten Transportstrecke (72) in der zweiten Orientierung (26) ausgerichtet sind; - Weitertransportieren (96) der Verschlusskappen (12), die in der ersten Orientierung (24) ausgerichtet sind, in der Transportrichtung (16) in der Mehrzahl von Sortiertaschen (14).
- Führen (108) nur der Verschlusskappen (12), die in der ersten Orientierung (24) ausgerichtet sind, aus der Transportrichtung (16) in einem ersten Abschnitt (66) auf eine erste Transportstrecke (64), so dass die Verschlusskappen (12) auf der ersten Transportstrecke (64) in der ersten Orientierung (24) ausgerichtet sind, wobei der erste Abschnitt (66) stromabwärts von dem Anschlagelement (18) angeordnet ist;
- Ändern (112) der Orientierung (24, 26) der Verschlusskappen (12) auf der zweiten Transportstrecke (72) mittels einer Wendeeinrichtung (74), so dass die Verschlusskappen (12) von der zweiten Orientierung (26) in die erste Orientierung (24) gewendet werden;

14. Verfahren (120) zum Zuführen einer Mehrzahl von Verschlusskappen (12) zu einer Füllanlage (80), wobei das Verfahren (120) folgende Schritte aufweist:
- Vereinzeln (122) und Sortieren der Verschlusskappen (12) mittels des Verfahrens (100) nach Anspruch 13; und
- Zuführen (124) der vereinzelten Verschlusskappen (12) zu der Füllanlage (80), durch die erste Transportstrecke (64) und die zweite Transportstrecke (72).

## Claims

1. Separating apparatus (50) having a drum (52) for separating closure caps (12) and having a sorting device (10) for sorting a plurality of closure caps (12), wherein the sorting device (10) has a plurality of sorting pockets (14) for transporting in each case one of the closure caps (12) in a transport direction (16) and has a stop element (18) with an abutment surface (20), wherein a cross-sectional profile (22) of each of the sorting pockets (14) is configured in such a way that a closure cap (12) can be positioned in the sorting pocket (14) in a first orientation (24) or in a second orientation (26) in such a way that, at least in the second orientation (26), the closure cap (12) protrudes from the sorting pocket (14), wherein the first orientation (24) and the second orientation (26) are different, and wherein the abutment surface (20) is arranged obliquely to the transport direction (16), wherein the stop element (18) is arranged in such a way that the closure cap (12) comes into abutment with the abutment surface (20), and is guided from the transport direction along the abutment surface (20), only in the second orientation (26), wherein the drum (52) is configured in such a way that each closure cap (12) is separated into a sorting pocket (14) in each case, wherein the separating apparatus (50) has a first transport path (64) and a first section (66), wherein the first section (66) is arranged downstream of the stop element (18) and is configured in such a way that the closure caps (12) are each guided to the first transport path (64) such that the closure caps (12) are oriented in the first orientation (24) on the first transport path (64), wherein, in the first section (66), the separating apparatus (50) has a further stop element (68) with a further abutment surface (70), wherein the further abutment surface (70) is arranged obliquely to the transport direction (16), wherein the further stop element (68) is arranged in such a way that each closure cap (12) in the first orientation (24) comes into abutment with the further abutment surface (70) and is guided along the abutment surface (70) to the first transport path (64), wherein a longitudinal axis (58) of the drum (52) is inclined at an angle β in relation to a vertical direction, which vertical direction corresponds to the direction of gravitational force,
**characterized in that**
the separating apparatus (50) has a second transport path (72), wherein the stop element (18) is arranged in such a way that each closure cap (12) in the second orientation is guided along the abutment surface (20) to the second transport path (72) such that the closure caps (12) are oriented in the second orientation (26) on the second transport path (72), wherein the separating apparatus (50) has a turn-over device (74) which is configured for changing the orientation (24, 26) of the closure caps (12) on the second transport path (72) such that the closure caps (12) are turned from the second orientation (26) over into the first orientation (24).

2. Separating apparatus according to Claim 1, **characterized in that** the first orientation (24) and the second orientation (26) are directed oppositely with respect to one another.

3. Separating apparatus according to Claim 1 or 2, **characterized in that** the cross-sectional profile (22) of each sorting pocket (14) provides a first bearing plane (32) and a second bearing plane (34), which are configured in such a way that the closure cap (12) bears on the first bearing plane (32) in the first orientation (24) and bears on the second bearing plane (34) in the second orientation (26), and wherein a first distance (36) from the first bearing plane (32) to the stop element (18) is larger than a second distance (38) from the second bearing plane (34) to the stop element (18), in particular wherein the first bearing plane (32) and the second bearing plane (34) are arranged parallel to one another.

4. Separating apparatus according to one of Claims 1 to 3, **characterized in that** the abutment surface (20) extends in a guiding direction (28), wherein the guiding direction (28) corresponds to the direction into which the closure cap (12) is guided from the transport direction (16) along the abutment surface (20), in particular wherein the sorting pocket (14) has an opening (30) which is configured in such a way that the closure cap (12) is moved out of the sorting pocket (14) in the guiding direction (28) when the closure cap (12) is guided along the abutment surface (20).

5. Separating apparatus according to Claim 4, **characterized in that** the guiding direction (28) includes an angle α of between 0° and 90°, preferably of between 20° and 70°, in particular of 45°, with the transport direction (16).

6. Separating apparatus according to one of Claims 1 to 5, **characterized in that** the drum (52) has a rotatably mounted disc (54), wherein the plurality of sorting pockets (14) are arranged circumferentially on an outer edge (56) of the disc (54), and wherein the separating apparatus (50) has a drive unit (62) for rotating the disc (54) about a longitudinal axis (58) of the drum (52), wherein the transport direction (16) corresponds to the direction of rotation of the disc (54).

7. Separating apparatus according to one of Claims 1 to 6, **characterized in that** the turn-over device (74) is in the form of a cyclical or continuous turn-over device.

8. Separating apparatus according to one of Claims 1 to 7, **characterized in that** the separating apparatus (50) has a second section (76), which is situated downstream of the turn-over device (74) and in which the first transport path (64) and the second transport path (72) are merged.

9. Separating apparatus according to one of Claims 1 to 8, **characterized in that** the angle β is between 0° and 90°, preferably between 20° and 70°, in particular is 45°.

10. Separating apparatus according to one of Claims 1 to 9, **characterized in that** the first transport path (64) and/or the second transport path (72) are/is configured in such a way that the closure caps (12) are moved along the first transport path (64) or the second transport path (72) by means of gravitational force.

11. Separating apparatus according to one of Claims 1 to 10, **characterized in that** the separating apparatus (50) has a pneumatic nozzle device which is configured in such a way that it generates an airflow by means of which the closure caps (12) are moved along the first transport path (64) or the second transport path (72).

12. Filling installation (80) having a separating apparatus (50) according to one of Claims 1 to 11, wherein the separating apparatus (50) is configured for feeding the closure caps (12) to the filling installation (80).

13. Method (100) for separating and sorting closure caps (12), wherein the method (100) comprises the following steps:
- introducing (102) the closure caps (12) into a drum (52) having a rotatably mounted disc (54), wherein a plurality of sorting pockets (14) are arranged circumferentially on an outer edge (56) of the disc (54);
- rotating (104) the disc (54) about a longitudinal axis (58) of the drum (52) in order to separate the closure caps (12) into the sorting pockets (14), wherein the longitudinal axis (58) of the drum (52) is inclined at an angle β in relation to a vertical direction, which vertical direction corresponds to the direction of gravitational force;
- transporting (92) in each case one of the closure caps (12) in a transport direction (16) in, in each case, one of the sorting pockets (14), wherein a cross-sectional profile (22) of each of the sorting pockets (14) is configured in such a way that a closure cap (12) can be positioned in the sorting pocket (14) in a first orientation (24) or in a second orientation (26) in such a way that, at least in the second orientation (26), the closure cap (12) protrudes from the sorting pocket (14), wherein the closure caps (12) are each positioned in the sorting pockets in the first orientation (24) or in the second orientation (26);
- guiding (94) only the closure caps (12) which are oriented in the second orientation (26) from the transport direction (16) along an abutment surface (20) of a stop element (18), wherein the abutment surface (20) is arranged obliquely to the transport direction (16), wherein the stop element (18) is arranged in such a way that the closure cap (12) comes into abutment with the abutment surface (20) only in the second orientation (26), wherein each closure cap (12) in the second orientation is guided along the abutment surface (20) to a second transport path (72) such that the closure caps (12) are oriented in the second orientation (26) on the second transport path (72); - onwardly transporting (96) the closure caps (12) which are oriented in the first orientation (24) in the transport direction (16) in the plurality of sorting pockets (14);
- guiding (108) only the closure caps (12) which are oriented in the first orientation (24) from the transport direction (16) in a first section (66) to a first transport path (64) such that the closure caps (12) are oriented in the first orientation (24) on the first transport path (64), wherein the first section (66) is arranged downstream of the stop element (18);
- changing (112) the orientation (24, 26) of the closure caps (12) on the second transport path (72) by means of a turn-over device (74) such that the closure caps (12) are turned from the second orientation (26) over into the first orientation (24).

14. Method (120) for feeding a plurality of closure caps (12) to a filling installation (80), wherein the method (120) comprises the following steps:
- separating (122) and sorting the closure caps (12) by means of the method (100) according to Claim 13; and
- feeding (124) the separated closure caps (12) to the filling installation (80) by way of the first transport path (64) and the second transport path (72).

## Revendications

1. Dispositif de séparation (50) muni d'un tambour (52) pour la séparation de capuchons de fermeture (12) et d'un appareil de tri (10) pour le tri d'une pluralité de capuchons de fermeture (12), l'appareil de tri (10) comprenant une pluralité de poches de tri (14) pour le transport à chaque fois d'un des capuchons de fermeture (12) dans une direction de transport (16) et un élément de butée (18) muni d'une surface d'appui (20), une allure de section transversale (22) de chacune des poches de tri (14) étant configurée de telle sorte qu'un capuchon de fermeture (12) peut être positionné dans la poche de tri (14) dans une première orientation (24) ou dans une deuxième orientation (26), de telle sorte que le capuchon de fermeture (12) fait saillie hors de la poche de tri (14) au moins dans la deuxième orientation (26), la première orientation (24) et la deuxième orientation (26) étant différentes, et la surface d'appui (20) étant agencée en biais par rapport à la direction de transport (16), l'élément de butée (18) étant agencé de telle sorte que le capuchon de fermeture (12) ne vient en appui sur la surface d'appui (20) que dans la deuxième orientation (26) et est guidé hors de la direction de transport (16) le long de la surface d'appui (20), le tambour (52) étant configuré de telle sorte que chaque capuchon de fermeture (12) est séparé à chaque fois dans une poche de tri (14), le dispositif de séparation (50) comprenant une première voie de transport (64) et une première section (66), la première section (66) étant agencée en aval de l'élément de butée (18) et étant configurée de telle sorte que les capuchons de fermeture (12) sont guidés à chaque fois sur la première voie de transport (64), de telle sorte que les capuchons de fermeture (12) sont dirigés dans la première orientation (24) sur la première voie de transport (64), le dispositif de séparation (50) comprenant dans la première section (66) un élément de butée supplémentaire (68) muni d'une surface d'appui supplémentaire (70), la surface d'appui supplémentaire (70) étant agencée en biais par rapport à la direction de transport (16), l'élément de butée supplémentaire (68) étant agencé de telle sorte que chaque capuchon de fermeture (12) dans la première orientation (24) vient en appui sur la surface d'appui supplémentaire (70) et est guidé le long de la surface d'appui (70) sur la première voie de transport (64), un axe longitudinal (58) du tambour (52) étant incliné d'un angle β par rapport à une direction verticale, qui correspond à la direction de la force de pesanteur,
**caractérisé en ce que**
le dispositif de séparation (50) comprend une deuxième voie de transport (72), l'élément de butée (18) étant agencé de telle sorte que chaque capuchon de fermeture (12) dans la deuxième orientation est guidé le long de la surface d'appui (20) sur la deuxième voie de transport (72), de telle sorte que les capuchons de fermeture (12) sont dirigés dans la deuxième orientation (26) sur la deuxième voie de transport (72), le dispositif de séparation (50) comprenant un appareil de retournement (74), qui est configuré pour modifier l'orientation (24, 26) des capuchons de fermeture (12) sur la deuxième voie de transport (72), de telle sorte que les capuchons de fermeture (12) sont retournés de la deuxième orientation (26) dans la première orientation (24).

2. Dispositif de séparation selon la revendication 1, **caractérisé en ce que** la première orientation (24) et la deuxième orientation (26) sont l'inverse l'une de l'autre.

3. Dispositif de séparation selon la revendication 1 ou 2, **caractérisé en ce que** l'allure de section transversale (22) de chaque poche de tri (14) fournit un premier plan d'application (32) et un deuxième plan d'application (34), qui sont configurés de telle sorte que le capuchon de fermeture (12) dans la première orientation (24) repose sur le premier plan d'application (32) et dans la deuxième orientation (26) sur le deuxième plan d'application (34), et un premier écart (36) du premier plan d'application (32) à l'élément de butée (18) étant supérieur à un deuxième écart (38) du deuxième plan d'application (34) à l'élément de butée (18), le premier plan d'application (32) et le deuxième plan d'application (34) étant notamment agencés parallèlement l'un à l'autre.

4. Dispositif de séparation selon l'une quelconque des revendications 1 à 3, **caractérisé en ce que** la surface d'appui (20) s'étend dans une direction de guidage (28), la direction de guidage (28) correspondant à la direction dans laquelle le capuchon de fermeture (12) est extrait hors de la direction de transport (16) le long de la surface d'appui (20), la poche de tri (14) comprenant notamment une ouverture (30), qui est configurée de telle sorte que le capuchon de fermeture (12) se déplace hors de la poche de tri (14) dans la direction de guidage (28) lorsque le capuchon de fermeture (12) est guidé le long de la surface d'appui (20).

5. Dispositif de séparation selon la revendication 4, **caractérisé en ce que** la direction de guidage (28) forme un angle α compris entre 0° et 90°, de préférence entre 20° et 70°, notamment de 45°, avec la direction de transport (16).

6. Dispositif de séparation selon l'une quelconque des revendications 1 à 5, **caractérisé en ce que** le tambour (52) comprend un disque monté rotatif (54), la pluralité de poches de tri (14) étant agencées en circonférence sur un bord extérieur (56) du disque (54), et le dispositif de séparation (50) comprenant une unité d'entraînement (62) pour la rotation du disque (54) autour d'un axe longitudinal (58) du tambour (52), la direction de transport (16) correspondant à la direction de rotation du disque (54).

7. Dispositif de séparation selon l'une quelconque des revendications 1 à 6, **caractérisé en ce que** l'appareil de retournement (74) est configuré sous la forme d'un appareil de retournement cadencé ou continu.

8. Dispositif de séparation selon l'une quelconque des revendications 1 à 7, **caractérisé en ce que** le dispositif de séparation (50) comprend une deuxième section (76), qui est située en aval de l'appareil de retournement (74) et dans laquelle la première voie de transport (64) et la deuxième voie de transport (72) sont réunies.

9. Dispositif de séparation selon l'une quelconque des revendications 1 à 8, **caractérisé en ce que** l'angle β est compris entre 0° et 90°, de préférence entre 20° et 70°, notamment est de 45°.

10. Dispositif de séparation selon l'une quelconque des revendications 1 à 9, **caractérisé en ce que** la première voie de transport (64) et/ou la deuxième voie de transport (72) sont configurées de telle sorte que les capuchons de fermeture (12) sont déplacés au moyen de la force de pesanteur le long de la première voie de transport (64) ou de la deuxième voie de transport (72).

11. Dispositif de séparation selon l'une quelconque des revendications 1 à 10, **caractérisé en ce que** le dispositif de séparation (50) comprend un appareil pneumatique à buse, qui est configuré de telle sorte qu'il génère un courant d'air, au moyen duquel les capuchons de fermeture (12) sont déplacés le long de la première voie de transport (64) ou de la deuxième voie de transport (72).

12. Unité de remplissage (80) munie d'un dispositif de séparation (50) selon l'une quelconque des revendications 1 à 11, le dispositif de séparation (50) étant configuré pour acheminer les capuchons de fermeture (12) vers l'unité de remplissage (80).

13. Procédé (100) pour la séparation et le tri de capuchons de fermeture (12), le procédé (100) comprenant les étapes suivantes :
- l'introduction (102) des capuchons de fermeture (12) dans un tambour (52), qui comprend un disque monté rotatif (54), une pluralité de poches de tri (14) étant agencées en circonférence sur un bord extérieur (56) du disque (54) ;
- la rotation (104) du disque (54) autour d'un axe longitudinal (58) du tambour (52), afin de séparer les capuchons de fermeture (12) dans les poches de tri (14), l'axe longitudinal (58) du tambour (52) étant incliné d'un angle β par rapport à une direction verticale qui correspond à la direction de la force de pesanteur ;
- le transport (92) à chaque fois d'un des capuchons de fermeture (12) dans une direction de transport (16) à chaque fois dans une des poches de tri (14), une allure de section transversale (22) de chacune des poches de tri (14) étant configurée de telle sorte qu'un capuchon de fermeture (12) est positionné dans la poche de tri (14) dans une première orientation (24) ou dans une deuxième orientation (26), de telle sorte que le capuchon de fermeture (12) fait saillie hors de la poche de tri (14) au moins dans la deuxième orientation (26), les capuchons de fermeture (12) étant positionnés à chaque fois dans les poches de tri dans la première orientation (24) ou dans la deuxième orientation (26) ;
- le guidage (94) uniquement des capuchons de fermeture (12) qui sont dirigés dans la deuxième orientation (26) le long d'une surface d'appui (20) d'un élément de butée (18) hors de la direction de transport (16), la surface d'appui (20) étant agencée en biais par rapport à la direction de transport (16), l'élément de butée (18) étant agencé de telle sorte que le capuchon de fermeture (12) ne vient en appui sur la surface d'appui (20) que dans la deuxième orientation (26), chaque capuchon de fermeture (12) dans la deuxième orientation étant guidé le long de la surface d'appui (20) sur une deuxième voie de transport (72), de telle sorte que les capuchons de fermeture (12) sont dirigés dans la deuxième orientation (26) sur la deuxième voie de transport (72) ;
- le transport ultérieur (96) des capuchons de fermeture (12) qui sont dirigés dans la première orientation (24) dans la direction de transport (16) dans la pluralité de poches de tri (14) ;
- le guidage (108) uniquement des capuchons de fermeture (12) qui sont dirigés dans la première orientation (24) hors de la direction de transport (16) dans une première section (66) sur une première voie de transport (64), de telle sorte que les capuchons de fermeture (12) sont dirigés dans la première orientation (24) sur la première voie de transport (64), la première section (66) étant agencée en aval de l'élément de butée (18) ;
- la modification (112) de l'orientation (24, 26) des capuchons de fermeture (12) sur la deuxième voie de transport (72) au moyen d'un appareil de retournement (74), de telle sorte que les capuchons de fermeture (12) sont retournés de la deuxième orientation (26) dans la première orientation (24).

14. Procédé (120) pour l'acheminement une pluralité de capuchons de fermeture (12) vers une unité de remplissage (80), le procédé (120) comprenant les étapes suivantes :
- la séparation (122) et le tri des capuchons de fermeture (12) au moyen du procédé (100) selon la revendication 13 ; et
- l'acheminement (124) des capuchons de fermeture séparés (12) vers l'unité de remplissage (80), par la première voie de transport (64) et la deuxième voie de transport (72).
